# EUROPÄISCHE PATENTANMELDUNG

(11) **EP 3 978 326 A1**
(43) Veröffentlichungstag der Anmeldung: **06.04.2022**
(21) Anmeldenummer: 21198588.2
(22) Anmeldetag: 23.09.2021
(51) Int. Cl.: B60T 11/21, B60T 13/16, B60T 13/26, B60T 13/68

(54) **FREMDKRAFTBREMSANLAGE EINES FAHRZEUGS UND VERFAHREN ZU DEREN STEUERUNG**

(30) Priorität: 01.10.2020 DE 102020125639
(71) Anmelder: ZF CV Systems Global GmbH, 3006 Bern (CH)
(72) Erfinder: HAVERKAMP, Michael, Hannover (DE); VOLKER, Lars, 30926 Seelze (DE)
(74) Vertreter: Rabe, Dirk-Heinrich

(57) **Zusammenfassung**

Die Erfindung betrifft eine Fremdkraftbremsanlage (1.1) eines Fahrzeugs (2), mit einer Druckmittelquelle (14) und einer als Betriebsbrems- und Lenkbremsanlage nutzbare druckmittelbetriebene Primärbremsanlage (30), wobei diese mindestens ein Fußbremsventil (36a, 36b) sowie zwei beidseitig an einer Antriebsachse (8) angeordnete und unabhängig voneinander betätigbare Radbremszylinder (40a, 40b) aufweist. Zudem ist eine unabhängig von der Primärbremsanlage (30) betätigbare, zumindest als Hilfsbremsanlage nutzbare druckmittelbetriebene Sekundärbremsanlage (50) vorhanden, welche ein Bremssteuerventil (56) sowie mindestens einen auf die Radbremsen einer Fahrzeugachse (4, 8) wirksamen Bremszylinder (62a, 62b) aufweist. Die Sekundärbremsanlage (50) ist elektronisch steuerbar ausgebildet und weist ein als Magnetventil ausgebildetes Bremssteuerventil (56) auf. Mittels diesem ist die Bremskraft des mindestens einen Bremszylinders (62a, 62b) durch eine Zufuhr oder Abfuhr von Druckmittel in oder von demselben einstellbar. Zudem weist die Sekundärbremsanlage einen Drucksensor (64) auf, welcher an eine zu dem mindestens einen Bremszylinder (62a, 62b) führende Arbeitsleitung (60) angeschlossen ist, und eine elektronische Bremssteuereinheit (46) zur Auswertung eines Drucksignals des Drucksensors (64) sowie zur Ansteuerung des Bremssteuerventils (56) in Abhängigkeit von einem Bremswertsignal (SBW).

## Beschreibung

Die Erfindung betrifft eine Fremdkraftbremsanlage eines Fahrzeugs, mit einer Druckmittelquelle, mit einer als Betriebsbrems- und Lenkbremsanlage nutzbaren druckmittelbetriebenen Primärbremsanlage, wobei die Primärbremsanlage mindestens ein Fußbremsventil sowie zwei beidseitig an einer Antriebsachse angeordnete und unabhängig voneinander betätigbare Radbremszylinder aufweist, und mit einer unabhängig von der Primärbremsanlage betätigbaren, zumindest als Hilfsbremsanlage nutzbaren druckmittelbetriebenen Sekundärbremsanlage, wobei die Sekundärbremsanlage ein Bremssteuerventil sowie mindestens einen auf die Radbremsen einer Fahrzeugachse wirksamen Bremszylinder aufweist. Die Erfindung betrifft außerdem ein Verfahren zur Steuerung einer derartigen Sekundärbremsanlage in verschiedenen Betriebsarten in Abhängigkeit von einem Bremswertsignal.

Nutzfahrzeuge, die wie Ackerschlepper und Erntefahrzeuge für den Einsatz in der Landwirtschaft vorgesehen sind, weisen häufig eine druckmittelbetriebene Primärbremsanlage auf, die sowohl als Betriebsbremsanlage als auch als Lenkbremsanlage nutzbar ist. In der Funktion als Betriebsbremsanlage werden bei der Betätigung eines Bremspedals durch einen Fahrer alle angeschlossenen Radbremszylinder mit Druckmittel beaufschlagt, wodurch die betreffenden Radbremsen betätigt und das Fahrzeug abgebremst wird. Da bei Fahrten auf Äckern und Wiesen die Lenkung eines Fahrzeugs über die übliche Achsschenkellenkung an der Vorderachse oder Hinterachse aufgrund von lockerem Boden oder einer wegen Nässe und Pflanzenbewuchs rutschigen Oberfläche nicht ausreicht, um enge Wendemanöver durchzuführen, ist die Primärbremsanlage vieler derartiger Nutzfahrzeuge auch als Lenkbremsanlage nutzbar. Hierzu kann ein entsprechendes Fahrzeug mit zwei parallel angeordneten Bremspedalen ausgestattet sein, die im normalen Fahrbetrieb mechanisch miteinander gekoppelt sind und beim Befahren von Äckern und Wiesen bedarfsweise entkoppelt werden können. Die beiden Bremspedale stehen jeweils mit einem von zwei separaten Hauptbremszylindern in Stellverbindung, an die seitenweise über jeweils eine Bremsleitung zumindest an der Antriebsachse angeordnete Radbremszylinder angeschlossen sind. Durch die Betätigung eines der beiden Bremspedale wird auf der betreffenden Fahrzeugseite die Radbremse der Antriebsachse betätigt, wodurch die entsprechend eingeschlagene Lenkung unterstützt und ein enges Wendemanöver ermöglicht wird. Dabei wird das Wendemanöver durch das Achsdifferential der Antriebsachse dadurch unterstützt, dass die auf der einen Seite durch das Abbremsen bewirkte Reduzierung der Raddrehzahl auf der anderen Seite zu einer entsprechenden Erhöhung der Raddrehzahl führt.

In der DE 101 45 789 A1 sind mehrere Ausführungsformen einer Betriebsbrems- und Lenkbremsanlage eines Fahrzeugs beschrieben, das mit zwei über getrennte Bremspedale betätigbaren Hauptbremszylindern ausgerüstet ist. Bei einem Fahrzeug, das nur an einer antreibbaren Fahrzeugachse, hier der Hinterachse, mit Radbremsen versehen ist, wird bei einer Betätigung nur eines Bremspedals die zu dem Radbremszylinder des auf der anderen Fahrzeugseite befindlichen Fahrzeugrades führende Druckmittelleitung über ein selbsttätig wirksames Ausgleichsventil oder über ein Magnetventil abgesperrt, sodass nur das auf der Fahrzeugseite des betätigten Bremspedals befindliche Fahrzeugrad der Antriebsachse abgebremst wird. Bei einem Fahrzeug, das zusätzlich auch an einer nicht antreibbaren Fahrzeugachse, hier der Vorderachse, mit Radbremsen versehen ist, werden bei einer Betätigung nur eines Bremspedals zusätzlich die zu den Radbremszylindern der Vorderachse führenden Bremsleitungen über ein selbsttätig wirksames Zuschaltventil oder über mindestens ein weiteres Magnetventil abgesperrt, so dass die Fahrzeugräder der Vorderachse dann nicht abgebremst werden.

Es ist jedoch auch möglich, dass ein mit einer Betriebsbrems- und Lenkbremsanlage ausgerüstetes Fahrzeug mit nur einem Bremspedal versehen ist, bei dem die Lenkbremsfunktion über einen Schalter aktivierbar und deaktivierbar ist, wobei die Zuschaltung und Absperrung der Bremsleitungen der kurvenäußeren Radbremse der Antriebsachse und/oder der Radbremsen der nicht angetriebenen Fahrzeugachse in Abhängigkeit des Lenkeinschlags der Vorderräder oder des Lenkrads erfolgt.

Gemäß einer aktuell gültigen EU-Verordnung soll eine Fremdkraftbremsanlage eines für den Einsatz in der Land- und Forstwirtschaft vorgesehenen Fahrzeugs redundant ausgelegt sein. Diese Redundanz kann durch eine Betriebsbremsanlage mit zwei Bremskreisen gegeben sein, von denen zum Beispiel der erste Bremskreis die Radbremsen der Vorderachse und der zweite Bremskreis die Radbremsen der Hinterachse umfassen kann. Fällt einer der beiden Bremskreise aus, so muss das Fahrzeug über den anderen Bremskreis noch sicher abgebremst werden können. Hierbei muss bei einer zulässigen Höchstgeschwindigkeit von vₘₐₓ ≥ 30 km/h bei maximaler Beladung eine Bremsverzögerung a_{Br} von mindestens 2,2 m/s² gewährleistet sein soll (a_{Br} ≥ 2,2 m/s²). Ackerschlepper sind jedoch häufig nur an der Antriebsachse, also an der Hinterachse mit Radbremsen versehen. Falls auch die nicht antreibbare Vorderachse mit Radbremsen versehen ist, sind diese häufig unterdimensioniert ausgelegt, sodass die geforderte Bremsverzögerung von a_{Br} ≥ 2,2 m/s² mit den Radbremsen der Vorderachse alleine nicht erreicht werden kann.

Bei einer Ausbildung der Primärbremsanlage als Betriebsbrems- und Lenkbremsanlage mit getrennten Bremsleitungen pro Fahrzeugseite gilt die seitenweise Trennung der Bremsleitungen und Radbremszylinder nicht als Zweikreisbremsanlage, da die Abbremsung des Fahrzeugs mit den Radbremsen nur einer Fahrzeugseite ohne eine Beeinträchtigung der Fahrstabilität nicht möglich ist. Somit ist in diesem Fall zur Erfüllung der Redundanzforderung eine zumindest als Hilfsbremsanlage betreibbare Sekundärbremsanlage erforderlich, wobei die Sekundärbremsanlage unabhängig von der Primärbremsanlage betätigbar sein soll und in der Hilfsbremsfunktion die entsprechende Anforderung einer Bremsverzögerung a_{Br} von mindestens 2,2 m/s² ermöglichen soll.

Der vorliegenden Erfindung liegt die Aufgabe zugrunde, für ein mit einer Fremdkraftbremsanlage der eingangs genannten Art ausgerüstetes Fahrzeug eine druckmittelbetriebene, in unterschiedlichen Betriebsarten nutzbare Sekundärbremsanlage vorzustellen, welche auch als Hilfsbremsanlage betreibbar ist, und mit der die Zulassungsvorschriften gemäß der erwähnten EU-Verordnung erfüllt sowie ein konstruktiv einfacher sowie kostengünstiger Aufbau erreicht ist. Außerdem soll ein Verfahren zur Steuerung einer derartigen Sekundärbremsanlage in verschiedenen Betriebsarten in Abhängigkeit von einem Bremswertsignal vorgestellt werden.

Die Lösung dieser Aufgaben wurde mit einer Fremdkraftbremsanlage sowie einer darin integrierten Sekundärbremsanlage und mit einem Verfahren zur Betätigung derselben erreicht, welche die Merkmale der unabhängigen Ansprüche aufweisen. Vorteilhafte Weiterbildungen sind in den dazu jeweils abhängigen Ansprüchen definiert.

Demnach betrifft die Erfindung vorrichtungsbezogen eine Fremdkraftbremsanlage eines Fahrzeugs, mit einer Druckmittelquelle, mit einer als Betriebsbrems- und Lenkbremsanlage nutzbaren druckmittelbetriebenen Primärbremsanlage, und mit einer unabhängig von der Primärbremsanlage betätigbaren, zumindest als Hilfsbremsanlage nutzbaren druckmittelbetriebenen Sekundärbremsanlage. Die Primärbremsanlage weist mindestens ein Fußbremsventil sowie zwei beidseitig an einer Antriebsachse angeordnete und unabhängig voneinander betätigbare Radbremszylinder auf. Die Sekundärbremsanlage weist ein Bremssteuerventil sowie mindestens einen auf die Radbremsen einer Fahrzeugachse wirksamen Bremszylinder auf.

Zur Lösung der vorrichtungsbezogenen Aufgabe ist bei dieser Fremdkraftbremsanlage außerdem vorgesehen, dass die Sekundärbremsanlage elektronisch steuerbar ausgebildet ist und folgendes aufweist:
- ein als Magnetventil ausgebildetes Bremssteuerventil,
   mittels dem die Bremskraft des mindestens einen Bremszylinders durch eine Zufuhr oder Abfuhr von Druckmittel in oder von demselben einstellbar ist,
- einen Drucksensor,
   welcher an eine zu dem mindestens einen Bremszylinder führende Arbeitsleitung angeschlossen ist,
- und eine elektronische Bremssteuereinheit zur Auswertung eines Drucksignals des Drucksensors sowie zur Ansteuerung des Bremssteuerventils in Abhängigkeit von einem Bremswertsignal.

Durch die genannte elektronische Steuerbarkeit der Sekundärbremsanlage weist diese gute Steuerungseigenschaften auf und ist mit dem als Magnetventil ausgebildeten Bremssteuerventil, dem Drucksensor und der elektronischen Bremssteuereinheit steuerungstechnisch vergleichsweise einfach und kostengünstig aufgebaut. Bei entsprechender Dimensionierung des mindestens einen Bremszylinders und der Bremse, mit welcher der Bremszylinder in Wirkverbindung steht, können die Zulassungsvorschriften gemäß der genannten EU-Verordnung problemlos erfüllt werden.

Eine erste vorteilhafte Ausgestaltung sieht vor, dass das Bremssteuerventil als ein 3/3-Wege-Proportionalventil mit einem Druckmitteleingang, einem Druckmittelausgang und einem Arbeitsanschluss ausgebildet ist,
wobei der Arbeitsanschluss kontinuierlich zwischen einer Verbindung mit dem Druckmittelausgang und dem Druckmitteleingang verstellbar ist,
dass der Druckmitteleingang über eine Vorratsleitung mit einer Druckmittelquelle verbunden ist,
dass der Druckmittelausgang mit einer Druckmittelsenke verbunden ist,
dass der Arbeitsanschluss über die Arbeitsleitung mit dem mindestens einen Bremszylinder verbunden ist,
und dass der Arbeitsanschluss des Bremssteuerventils im unbestromten Zustand mit dem Druckmittelausgang sowie im maximal bestromten Zustand mit dem Druckmitteleingang verbunden ist.

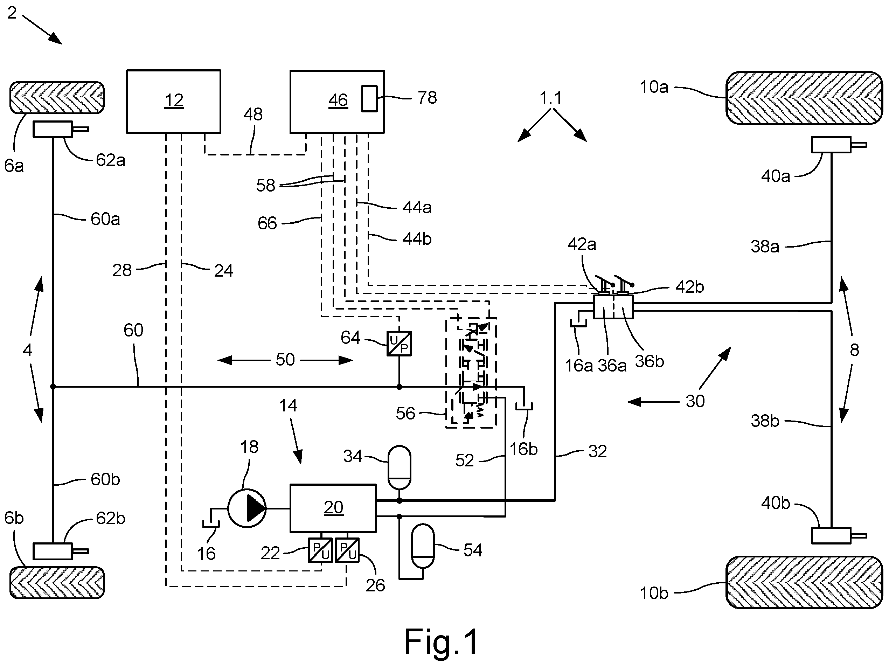

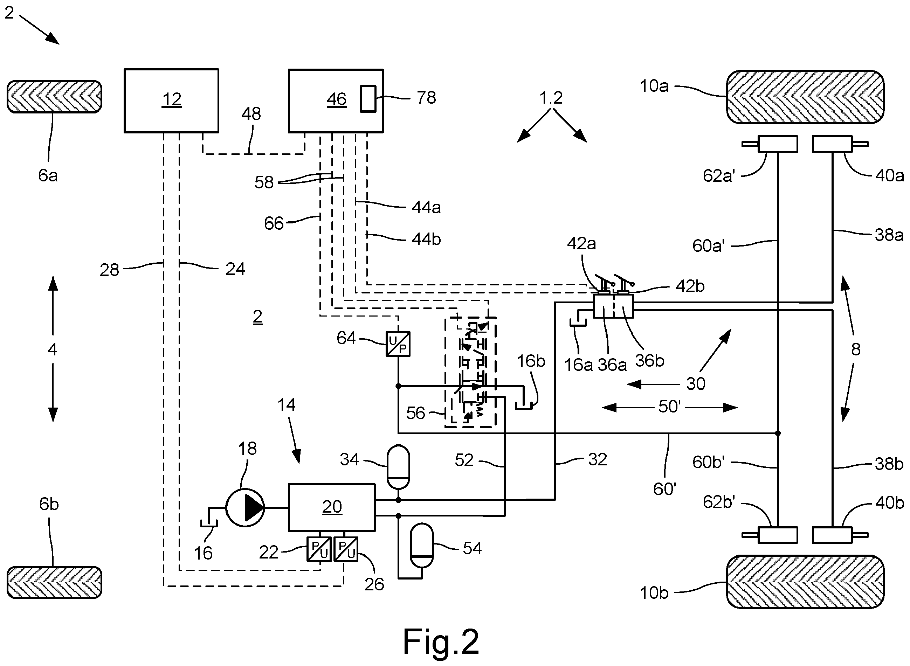

Mittels dieses Bremssteuerventils ist demnach an dem Arbeitsanschluss jeder beliebige Arbeitsdruck zwischen dem durch den Umgebungsdruck gegebenen minimalen Arbeitsdruck und einem aufgrund der Bauart und der gewählten Steuerungscharakteristik des Bremssteuerventils maximal möglichen Arbeitsdruck einstellbar. Der von dem Bremssteuerventil einstellbare Arbeitsdruck für die dem Sekundärbremskreis zugeordneten Bremsen steigt dabei mit zunehmend signalisiertem Bremsbedarf sowie zunehmender Bestromung des Bremssteuerventils an, wie dies für mittels Kolben-ZylinderAnordnungen betätigbaren Bremsen erwartet wird. Hierauf wird im Zusammenhang mit der Beschreibung der in den Figuren 1 und 2 dargestellten Ausführungsbeispiele noch genauer eingegangen.

Eine zweite vorteilhafte Ausgestaltung sieht vor, dass das Bremssteuerventil als ein 3/3-Wege-Proportionalventil mit einem Druckmitteleingang, einem Druckmittelausgang und einem Arbeitsanschluss ausgebildet ist,
wobei der Arbeitsanschluss kontinuierlich zwischen einer Verbindung mit dem Druckmittelausgang und dem Druckmitteleingang verstellbar ist,
dass der Druckmitteleingang über ein zwischen zwei Vorratsdruckleitungen angeordnetes Fußbremsventil mit einer Druckmittelquelle verbunden ist,
dass der Druckmittelausgang mit einer Druckmittelsenke verbunden ist,
dass der Arbeitsanschluss über die Arbeitsleitung mit dem mindestens einen Bremszylinder verbunden ist,
dass der Druckmitteleingang über eine Eingangsdrucksteuerleitung mit einem ersten Steuerdruckeingang verbunden ist, welcher auf ein erstes axiales Ende des Ventilschiebers des Bremssteuerventils wirkt,
dass der Druckmittelausgang über eine Ausgangsdrucksteuerleitung mit einem zweiten Steuerdruckeingang verbunden ist, welcher auf ein zweites axiales Ende des Ventilschiebers des Bremssteuerventils wirkt,
dass eine Ventilfeder auf das erste axiale Ende des Bremssteuerventils wirkt,
dass auf das zweite axiale Ende des Bremssteuerventils ein elektromagnetischer Aktuator wirkt,
und dass durch eine Bestromung des Aktuators eine Reduzierung des am Druckmittelausgang anliegenden Arbeitsdrucks im Vergleich mit dem am Druckmitteleingang anliegenden Vorratsdruck einstellbar ist.

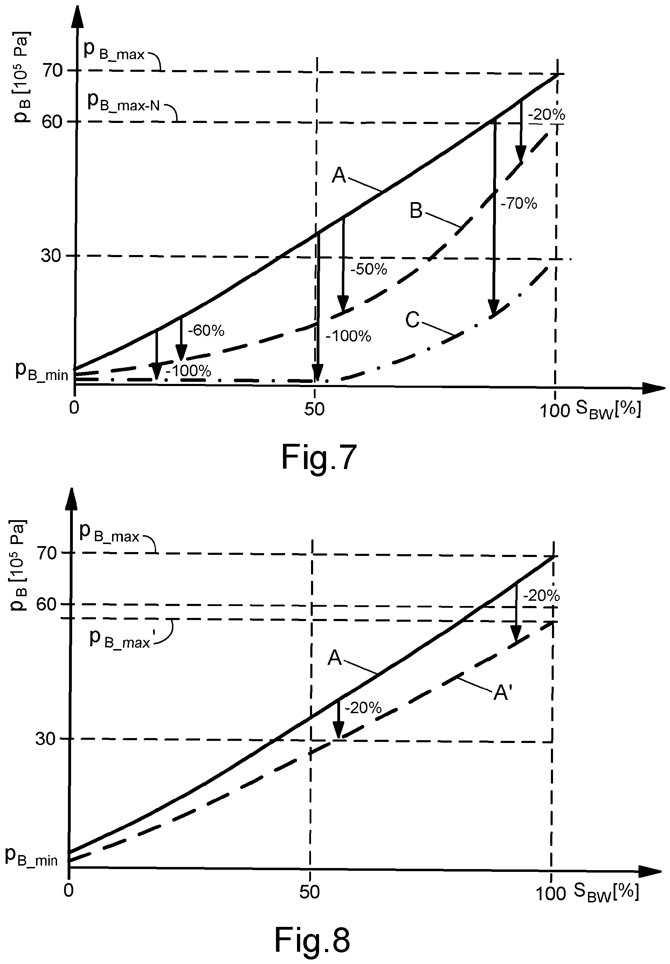

Mittels dieses gerade beschriebenen Bremssteuerventils ist an dem Arbeitsanschluss jeder beliebige Arbeitsdruck zwischen einem aufgrund der Bauart und der gewählten Steuerungscharakteristik des Bremssteuerventils maximal möglichen Arbeitsdruck und dem durch den Umgebungsdruck gegebenen minimalen Arbeitsdruck eingestellt werden. Der von dem Bremssteuerventil einstellbare Arbeitsdruck für die dem Sekundärbremskreis zugeordneten Bremsen sinkt dabei mit zunehmend signalisiertem Bremsbedarf sowie mit zunehmender Bestromung des Bremssteuerventils ab, wie dies für mittels Federspeicherbremszylinder betätigbare Bremsen benötigt wird. Hierauf wird im Zusammenhang mit der Beschreibung der in den Figuren 7 und 8 dargestellten Ausführungsbeispiele noch genauer eingegangen.

Die Sekundärbremsanlage kann gemäß einem ersten Ausführungsbeispiel mindestens zwei als aktiv wirksame Membran- oder Kolbenbremszylinder ausgebildete Bremszylinder aufweisen, die als Radbremszylinder beidseitig an den Radbremsen einer Antriebsachse oder einer nicht angetriebenen Fahrzeugachse angeordnet sind. Bei dieser Ausführung der Bremszylinder ist der Arbeitsdruck als Bremsdruck wirksam, über den die Bremskraft der Radbremsen direkt steuerbar ist, also die Radbremsen bei drucklosen Bremszylindern gelöst und mit maximalem Bremsdruck beaufschlagten Bremszylindern mit maximaler Bremskraft zugespannt sind.

Alternativ dazu kann die Sekundärbremsanlage gemäß einem zweiten Ausführungsbeispiel jedoch auch mindestens zwei als passiv wirksame Federspeicherbremszylinder ausgebildete Bremszylinder aufweisen, die als Radbremszylinder beidseitig an den Radbremsen einer Antriebsachse oder einer nicht angetriebenen Fahrzeugachse angeordnet sind. Bei dieser Ausführung der Bremszylinder ist der Arbeitsdruck als Bremslösedruck wirksam, über den die Bremskraft der Radbremsen invers steuerbar ist. Dabei sind die Radbremsen bei drucklosen Bremszylindern mit maximaler Bremskraft zugespannt und bei mit maximalem Bremsdruck beaufschlagten Bremszylindern gelöst.

Anstelle von Radbremszylindern kann die Sekundärbremsanlage gemäß einem dritten Ausführungsbeispiel auch mindestens einen als ein passiv wirksamer Federspeicherbremszylinder ausgebildeten Bremszylinder aufweisen, der als Achsbremszylinder an einer Wellenbremse einer zentralen Abtriebswelle des Antriebsstrangs angeordnet ist. Bei der zentralen Abtriebswelle kann es sich um eine Ausgangswelle des Fahrgetriebes, eine Eingangswelle des Achsdifferentials der Antriebsachse oder eine zwischen diesen angeordnete Kardanwelle handeln. Da die Räder der Antriebsachse über das Achsdifferential miteinander gekoppelt sind, führt eine Abbremsung der zentralen Abtriebswelle auch zum Abbremsen der Räder.

Bei den beiden letztgenannten Ausführungen der Sekundärbremsanlage, die aufgrund der passiv wirksamen Federspeicherbremszylinder auch als Feststellbremsanlagen nutzbar sind, ist zum Halten eines Arbeitsdruckes in den Bremszylindern beziehungsweise in dem einzigen Bremszylinder ein steuerbares, in Richtung des Bremssteuerventils sperrendes Rückschlagventil in der Arbeitsleitung angeordnet. Durch das Rückschlagventil kann ein in den Bremszylindern beziehungsweise in dem einzigen Bremszylinder anliegender Arbeitsdruck selbsttätig, also ohne einen steuerungsbedingten Energieverbrauch, eingeschlossen und damit konstant gehalten werden.

Das steuerbare Rückschlagventil ist bevorzugt druckgesteuert ausgebildet und durch eine Druckbeaufschlagung seines Steuereingangs entsperrbar. Dem Rückschlagventil ist dann ein Vorsteuerventil zugeordnet, durch das der Steuereingang des Rückschlagventils wechselweise mit der Druckmittelquelle oder einer Druckmittelsenke verbindbar ist.

Hinsichtlich des Vorsteuerventils ist vorzugsweise vorgesehen,
dass dieses als ein 3/2-Wege-Magnetschaltventil mit einem Druckmitteleingang, einem Druckmittelausgang und einem Steuerausgang ausgebildet ist,
dass der Druckmitteleingang über eine Anschlussleitung mit der Vorratsleitung verbunden ist,
dass der Druckmittelausgang mit der Druckmittelsenke verbunden ist,
dass der Steuerausgang mit dem Steuereingang des Rückschlagventils verbunden ist,
dass der Steuerausgang des Vorsteuerventils im unbestromten Zustand mit dem Druckmittelausgang sowie im bestromten Zustand mit dem Druckmitteleingang verbunden ist, und
dass der Elektromagnet des Vorsteuerventils über eine elektrische Steuerleitung mit der Bremssteuereinheit verbunden ist.

Zur Vereinfachung der Montage der Ventile im Fahrzeug und zur Vermeidung von Anschlussfehlern ist vorzugsweise vorgesehen, dass zumindest das Bremssteuerventil, das Rückschlagventil und das Vorsteuerventil in einem Bremssteuermodul zusammengefasst sind.

Der Bremssteuereinheit ist bevorzugt ein Datenspeicher zugeordnet, in dem für unterschiedliche Betriebsarten vorgesehene Kennlinien zur Einstellung des Arbeitsdruckes p_{B}, p_{FSB} in den Bremszylindern in Abhängigkeit von einem Bremswertsignal S_{BW} und/oder zur Berechnung von Kennlinien abgespeichert sind. Durch das Abspeichern entsprechender Kennlinien in dem Datenspeicher der elektronischen Steuereinheit ist neben dem Betrieb der Sekundärbremsanlage in unterschiedlichen Betriebsarten auch die Anpassung der Steuerung an unterschiedliche Fahrzeuge, Fahrzeugmassen, Beladungszustände sowie an unterschiedliche Steuerventile und Druckmittelleitungen auf einfache Weise möglich.

Die Sekundärbremsanlage kann als eine hydraulische Bremsanlage ausgebildet sein, deren Druckmittelquelle eine Ölpumpe, eine hydraulische Druckaufbereitungseinrichtung und einen hydraulischen Druckspeicher umfasst, und deren Druckmittelsenke durch mindestens einen hydraulischen Sammelbehälter gebildet ist.

Ebenso kann die Sekundärbremsanlage auch als eine Druckluftbremsanlage ausgebildet sein, deren Druckmittelquelle einen Kompressor, eine pneumatische Druckaufbereitungseinrichtung und einen pneumatischen Druckspeicher umfasst, und deren Druckmittelsenke durch mindestens einen Entlüftungsausgang gebildet ist.

Die Erfindung betrifft wie eingangs erwähnt auch ein Verfahren zur Steuerung einer druckmittelbetriebenen Sekundärbremsanlage in einer Fremdkraftbremsanlage eines Fahrzeugs mit den Merkmalen des Anspruchs 1. Die Fremdkraftbremsanlage weist demnach eine Primärbremsanlage und eine Sekundärbremsanlage auf. Hinsichtlich der Sekundärbremsanlage ist vorgesehen, dass diese elektronisch steuerbar ausgebildet ist und folgendes aufweist:
- ein als Magnetventil ausgebildetes Bremssteuerventil,
   mittels dem die Bremskraft des mindestens einen Bremszylinders durch eine Zufuhr oder Abfuhr von Druckmittel in oder von demselben einstellbar ist,
- einen Drucksensor, welcher an eine zu dem mindestens einen Bremszylinder führende Arbeitsleitung angeschlossen ist,
- und eine elektronische Bremssteuereinheit zur Auswertung eines Drucksignals des Drucksensors sowie zur Ansteuerung des Bremssteuerventils in Abhängigkeit von einem Bremswertsignal S_{BW}.

Das Verfahren zur Steuerung der Sekundärbremsanlage sieht gemäß der Erfindung vor, dass der Arbeitsdruck p_{B}, p_{FSB} in dem mindestens einen Bremszylinder in Abhängigkeit von dem Bremswertsignal S_{BW} unter Ansteuerung des Bremssteuerventils anhand von für unterschiedliche Betriebsarten der Sekundärbremsanlage gültige Kennlinien eingestellt wird, welche in einem der Bremssteuereinheit zugeordneten Datenspeicher abgespeichert sind.

Das Bremswertsignal S_{BW} gibt die Bremsanforderung des Fahrers wieder, wobei ein Wert des Bremswertsignals von S_{BW} = 0% eine nicht vorhandene Bremsanforderung kennzeichnet und ein Wert von S_{BW} = 100% eine maximale Bremsanforderung bedeuten. Das Bremswertsignal S_{BW} kann in an sich bekannter Weise mit einem Wegsensor erzeugt werden, welcher an einem Fußbremsventil des Fahrzeugs angeordnet und über eine elektrische Sensorleitung mit der Bremssteuereinheit verbunden ist. Alternativ dazu kann das Bremswertsignal S_{BW} auch mittels eines Drucksensors erzeugt werden, welcher an eine Bremsleitung eines Bremskreises der Primärbremsanlage des Fahrzeugs angeschlossen und über eine elektrische Sensorleitung mit der Bremssteuereinheit verbunden ist.

So kann bei einer Sekundärbremsanlage mit aktiv wirksamen Bremszylindern bei der Nutzung einer Notbremsfunktion, in welcher die Betriebsbremsanlage durch die Sekundärbremsanlage abbremsend unterstützt oder von dieser abbremsend ersetzt wird, vorgesehen sein, dass der hier als Bremsdruck wirksame Arbeitsdruck p_{B} gemäß einer ersten Kennlinie A ausgehend von einem minimalen Bremsdruck p_{B}_ₘᵢₙ nahe 0 Pa bei einem Wert des Bremswertsignals von S_{BW} = 0% mit ansteigendem Wert des Bremswertsignals weitgehend linear bis auf einen maximalen Bremsdruck p_{B}_ₘₐₓ von beispielsweise p_{B}_ₘₐₓ = 70 × 10⁵ Pa bei einem Wert des Bremswertsignals von S_{BW} = 100% erhöht wird. Durch den weitgehend linearen Verlauf der Bremsdruckerhöhung und der damit verbundenen linearen Zunahme der Bremskraft der Bremszylinder wird die schnellstmögliche Steigerung der Bremswirkung erzielt.

Weiter kann vorgesehen sein, dass der Arbeitsdruck p_{B} bei einer Sekundärbremsanlage mit aktiv wirksamen Bremszylindern in einer Hilfsbremsfunktion, bei deren Nutzung die Betriebsbremsanlage von der Sekundärbremsanlage hinsichtlich der Bremswirkung auf das Fahrzeug ersetzt wird, gemäß einer zweiten Kennlinie B ausgehend von dem minimalen Bremsdruck p_{B}_ₘᵢₙ bei einem Wert des Bremswertsignals von S_{BW} = 0% mit ansteigendem Wert des Bremswertsignals bis auf einen maximalen Bremsdruck im Normalbetrieb p_{B}__{max-N} bei einem Bremswertsignal S_{BW} = 100% erhöht wird, welcher unterhalb des maximalen Bremsdruckes p_{B}_ₘₐₓ liegt und beispielsweise p_{B}__{max-N} = 60 × 10⁵ Pa beträgt.

Diese Bremsdruckerhöhung kann beispielsweise einen quadratischen oder progressiven Verlauf aufweisen. Durch einen progressiven Verlauf der Bremsdruckerhöhung und der damit verbundenen progressiven Zunahme der Bremskraft der Bremszylinder wird ein besonders schneller Aufbau der Bremswirkung erzielt, wobei die Änderung der Bremswirkung jedoch dem üblichen Verhalten einer druckgesteuerten Primärbremsanlage angepasst ist. Der konkrete kennlinienbezogene Verlauf der Bremsdruckerhöhung kann von dem Fahrzeugtyp, dem Fahrzeuggesamtgewicht und/oder den speziellen Wünschen des Fahrzeugherstellers abhängen.

Außerdem kann vorgesehen sein, dass der Arbeitsdruck p_{B} bei einer Sekundärbremsanlage mit aktiv wirksamen Bremszylindern in einer Zusatzbremsfunktion, bei deren Nutzung die Betriebsbremsanlage bei höheren Bremswertsignalen (beispielsweise S_{BW} ≥ 54%) mittels der Sekundärbremsanlage abbremsend unterstützt wird, gemäß einer dritten Kennlinie C ausgehend von dem minimalen Bremsdruck p_{B}_ₘᵢₙ bei einem Wert des Bremswertsignals von S_{BW} = 0% ab einem festgelegten Startwert des Bremswertsignals S_{BW_Start} (beispielsweise S_{BW_Start} = 54%) mit ansteigendem Wert des Bremswertsignals bis auf einen solchen Arbeitsdruck p_{B} bei einem Wert des Bremswertsignals von S_{BW} = 100% erhöht wird, welcher zwischen dem minimalen Bremsdruck p_{B}_ₘᵢₙ und dem maximalen Bremsdruck im Normalbetrieb p_{B}__{max-N} liegt (zum Beispiel p_{B} = 30 × 10⁵ Pa).

Durch einen auch hier vorteilhaften quadratischen oder progressiven Verlauf der Bremsdruckerhöhung und der damit verbundenen schnellen Zunahme der Bremskraft der Bremszylinder ist die unterstützende Bremswirkung der Sekundärbremsanlage in Verbindung mit der Bremswirkung der Primärbremsanlage dem üblichen Verhalten einer druckgesteuerten Primärbremsanlage mit stärkeren Radbremsen angepasst. Der konkrete Verlauf der Bremsdruckerhöhung kann von dem Fahrzeugtyp, dem Fahrzeuggesamtgewicht und/oder den speziellen Wünschen des Fahrzeugherstellers abhängen.

Die genannten drei ersten Kennlinien A, B, C zur Steuerung der Sekundärbremsanlage in der jeweiligen Betriebsart können fest vorgegeben sein. Es ist jedoch auch möglich, dass die zweite und dritte Kennlinie B, C für die Hilfsbremsfunktion beziehungsweise für die Zusatzbremsfunktion aus der ersten Kennlinie A für die Notbremsfunktion der Sekundärbremsanlage mittels einer Übertragungsfunktion mit variabler Absenkung des Arbeitsdruckes p_{B} bei ansteigenden Werten des Bremswertsignals S_{BW} erzeugt werden, wobei die Absenkung des Arbeitsdruckes p_{B} bei niedrigen Werten des Bremswertsignals (S_{BW} ≤ 50%) größer ist als bei hohen Werten des Bremswertsignals (S_{BW} > 50%).

Drei weitere mögliche Kennlinien A', B', C' für ein leichtes Fahrzeug oder ein Fahrzeug mit geringer Beladung weisen im Vergleich zu den drei oben genannten Kennlinien A, B, C für ein schweres Fahrzeug oder ein Fahrzeug mit großer Beladung vorzugsweise jeweils einen in Richtung des minimalen Arbeitsdruckes p_{B}_ₘᵢₙ reduzierten Verlauf des Arbeitsdruckes p_{B} bezogen auf ansteigende Werte des Bremswertsignals S_{BW} auf. Hierdurch werden eine zu starke Bremsverzögerung des leichteren Fahrzeugs und eine unnötig hohe Belastung der Radbremsen der Sekundärbremsanlage vermieden.

Zur Ermittlung dieser vierten, fünften und sechsten Kennlinie A', B', C' für ein leichtes Fahrzeug oder ein Fahrzeug mit geringer Beladung können diese aus den entsprechenden drei ersten Kennlinien A, B, C für ein schweres Fahrzeug oder ein Fahrzeug mit hoher Beladung durch eine zum Fahrzeuggewicht proportionale Reduzierung des Arbeitsdruckes p_{B} bezogen auf ansteigende Werte des Bremswertsignals S_{BW} erzeugt werden.

Bei einer Sekundärbremsanlage mit passiv wirksamen Bremszylindern kann bei der Nutzung einer Notbremsfunktion, bei welcher die Betriebsbremsanlage durch die Sekundärbremsanlage abbremsend unterstützt oder von dieser ersetzt wird, vorgesehen sein, dass der hier als Bremslösedruck wirksame Arbeitsdruck p_{FSB} gemäß einer siebten Kennlinie D ausgehend von einem maximalen Arbeitsdruck p_{FSB}_ₘₐₓ (beispielsweise p_{FSB}_ₘₐₓ = 70 × 10⁵ Pa) bei einem Wert des Bremswertsignals von S_{BW} = 0% mit ansteigendem Wert des Bremswertsignals weitgehend linear bis auf einen minimalen Arbeitsdruck p_{FSB}_ₘᵢₙ nahe 0 Pa bei einem Wert des Bremswertsignals von S_{BW} = 100% abgesenkt wird. Durch den weitgehend linearen Verlauf der Arbeitsdruckabsenkung und der damit verbundenen linearen Zunahme der Bremskraft der Federspeicherbremszylinder wird die schnellstmögliche Steigerung der Bremswirkung erzielt.

Bei der Nutzung einer Hilfsbremsfunktion mittels einer Sekundärbremsanlage mit passiv wirksamen Bremszylindern, bei welcher die Betriebsbremsanlage von der Sekundärbremsanlage hinsichtlich der Bremswirkung auf das Fahrzeug ersetzt wird, wird der Arbeitsdruck p_{FSB} gemäß einer achten Kennlinie E ausgehend von dem maximalen Arbeitsdruck p_{FSB}_ₘₐₓ bei einem Wert des Bremswertsignals von S_{BW} = 0% mit ansteigenden Werten des Bremswertsignals bis auf einen maximalen Arbeitsdruck im Normalbetrieb p_{FSB}__{minN} bei einem Wert des Bremswertsignals von S_{BW} = 100% abgesenkt, welcher über dem minimalen Arbeitsdruck p_{FSB}_ₘᵢₙ liegt (zum Beispiel p_{FSB}__{min-N} = 12,5 × 10⁵ Pa). Durch den beispielsweise quadratischen oder progressiven Verlauf der Arbeitsdruckabsenkung und der damit verbundenen quadratischen oder progressiven Zunahme der Bremskraft der Federspeicherbremszylinder wird ebenfalls ein schneller Aufbau der Bremswirkung erzielt, wobei die Änderung der Bremswirkung jedoch dem üblichen Verhalten einer druckgesteuerten Primärbremsanlage angepasst ist.

Weiter kann vorgesehen sein, dass der Arbeitsdruck p_{FSB} bei einer Sekundärbremsanlage mit passiv wirksamen Bremszylindern bei Nutzung einer Zusatzbremsfunktion, bei welcher die Betriebsbremsanlage bei höheren Werten des Bremswertsignals (beispielsweise S_{BW} ≥ 54%) von der Sekundärbremsanlage bremsend unterstützt wird, gemäß einer neunten Kennlinie F ausgehend von dem maximalen Arbeitsdruck p_{FSB}_ₘₐₓ bei einem Wert des Bremswertsignals von S_{BW} = 0% ab einem festgelegten Startwert des Bremswertsignals S_{BW_Start} (beispielsweise S_{BW_Start} = 54%) mit ansteigenden Werten des Bremswertsignals bis auf einen Arbeitsdruck p_{FSB} bei einem Wert des Bremswertsignals von S_{BW} = 100% abgesenkt wird, welcher zwischen dem maximalen Arbeitsdruck p_{FSB}_ₘₐₓ und dem minimalen Arbeitsdruck im Normalbetrieb p_{FSB}__{min-N} liegt (beispielsweise p_{FSB} = 47 × 10⁵ Pa).

Durch einen hier ebenfalls vorteilhaften quadratischen oder progressiven Verlauf der Arbeitsdruckabsenkung und der damit verbundenen schnellen Zunahme der Bremskraft der Federspeicherbremszylinder ist die unterstützende Bremswirkung der Sekundärbremsanlage in Verbindung mit der Bremswirkung der Primärbremsanlage dem üblichen Verhalten einer druckgesteuerten Primärbremsanlage mit stärkeren Radbremsen angepasst.

Bei einer Sekundärbremsanlage mit passiv wirksamen Bremszylindern, also mit Federspeicherbremszylindern, ist der maximale Arbeitsdruck p_{FSB-max} durch die Federsteifigkeit der Bremsfedern in den Federspeicherbremszylindern festgelegt, da die durch diese betätigten Bremsen erst bei diesem hohen Arbeitsdruck vollständig gelöst sind.

Wenn die siebte, achte oder neunte Kennlinie D, E, F zur Steuerung der Sekundärbremsanlage in der jeweiligen Betriebsart nicht fest vorgegeben sind, können die achte und neunte Kennlinie E, F für die Hilfsbremsfunktion beziehungsweise für die Zusatzbremsfunktion aus der siebten Kennlinie D für die Notbremsfunktion der Sekundärbremsanlage mittels einer Übertragungsfunktion mit variabler Erhöhung des Arbeitsdruckes p_{FSB} über dem Bremswertsignal S_{BW} in Richtung des maximalen Arbeitsdruckes p_{FSB}_ₘₐₓ erzeugt werden, wobei die Erhöhung des Arbeitsdruckes p_{FSB} bei niedrigen Werten des Bremswertsignals (beispielsweise S_{BW} ≤ 50%) geringer ist als bei hohen Bremswertsignalen (beispielsweise S_{BW} > 50%).

Sofern eine Sekundärbremsanlage eines leichteren Fahrzeugs nicht mit schwächeren Federspeicherbremszylindern in Verbindung mit einem niedrigeren Niveau des Arbeitsdruckes p_{FSB} ausgerüstet ist, weisen zehnte, elfte oder zwölfte Kennlinien D', E', F' für ein leichtes Fahrzeug oder ein Fahrzeug mit geringer Beladung im Vergleich mit den entsprechenden siebten, achten und elften Kennlinien D, E, F für ein schweres Fahrzeug oder ein Fahrzeug mit hoher Beladung jeweils einen in Richtung des maximalen Arbeitsdruckes p_{FSB}_ₘₐₓ erhöhten Verlauf des Arbeitsdruckes p_{FSB} bezogen auf ansteigende Werte des Bremswertsignals S_{BW} auf. Hierdurch werden unter Inkaufnahme eines insgesamt höheren Arbeitsdruckniveaus eine zu starke Bremsverzögerung des leichteren Fahrzeugs und eine unnötig hohe Belastung der Radbremsen der Sekundärbremsanlage vermieden.

Zur Erzeugung der zehnten, elften oder zwölften Kennlinie D', E', F' für ein leichtes Fahrzeug oder ein Fahrzeug mit geringer Beladung können diese aus den entsprechenden siebten, achten und elften Kennlinien D, E, F für ein schweres Fahrzeug oder ein Fahrzeug mit hoher Beladung durch eine zum Fahrzeuggewicht proportionale variable Erhöhung des Arbeitsdruckes p_{FSB} bezogen auf ansteigende Werte des Bremswertsignals S_{BW} in Richtung des Maximaldruckes p_{FSB}_ₘₐₓ erzeugt werden, wobei die Erhöhung des Arbeitsdruckes p_{FSB} bei niedrigen Werten des Bremswertsignals (beispielsweise S_{BW} ≤ 50%) geringer ist als bei hohen Werten des Bremswertsignals (beispielsweise S_{BW} > 50%).

Zur weiteren Verdeutlichung der Erfindung ist der Beschreibung eine Zeichnung mit vier Ausführungsbeispielen beigefügt. In dieser zeigt
Fig. 1 eine Fremdkraftbremsanlage eines Fahrzeugs mit einer Primärbremsanlage und einer ersten Ausführungsform einer erfindungsgemäßen Sekundärbremsanlage in einer schematischen Ansicht,
Fig. 2 eine Fremdkraftbremsanlage eines Fahrzeugs mit einer Primärbremsanlage gemäß Fig. 1 und einer zweiten Ausführungsform einer erfindungsgemäßen Sekundärbremsanlage in einer schematischen Ansicht,
Fig. 3 eine Fremdkraftbremsanlage eines Fahrzeugs mit einer Primärbremsanlage gemäß Fig. 1 und einer dritten Ausführungsform einer erfindungsgemäßen Sekundärbremsanlage in einer schematischen Ansicht,
Fig. 4 eine Fremdkraftbremsanlage eines Fahrzeugs mit einer Primärbremsanlage gemäß Fig. 1 und einer vierten Ausführungsform einer erfindungsgemäßen Sekundärbremsanlage in einer schematischen Ansicht, deren Bremssteuerventil als Druckreduzierventil ausgebildet ist,
Fig. 5 ein Diagramm mit mehreren Arbeitsdruck-Kennlinien A, B, C für unterschiedliche Betriebsarten der Sekundärbremsanlage gemäß Fig. 1 oder Fig. 2 eines schweren Fahrzeugtyps,
Fig. 6 ein Diagramm mit mehreren Arbeitsdruck-Kennlinien A, B', C' für unterschiedliche Betriebsarten der Sekundärbremsanlage gemäß Fig. 1 oder Fig. 2 eines leichten Fahrzeugtyps,
Fig. 7 ein Diagramm mit einer ersten Arbeitsdruck-Kennlinie A, welche einen maximalen Arbeitsdruckverlauf in Abhängigkeit von einem signalisierten Bremsbedarf an der Sekundärbremsanlage gemäß Fig. 4 eines ersten Fahrzeugtyps kennzeichnet, sowie zwei weitere Arbeitsdruck-Kennlinien B, C, welche im Vergleich dazu jeweils einen mittels eines als Druckreduzierventil ausgebildeten Bremssteuerventils gemäß Fig. 4 reduzierten Druckverlaufs aufweisen,
Fig. 8 ein Diagramm mit einer ersten Arbeitsdruck-Kennlinie A, welche den maximalen Arbeitsdruckverlauf gemäß Fig. 7 zeigt, sowie eine zweite Arbeitsdruck-Kennlinie A' für einen abgesenkten maximalen Arbeitsdruckverlauf über den Bremsbedarf für einen zweiten Fahrzeugtyp, welcher mittels des als Druckreduzierventil ausgebildeten Bremssteuerventils gemäß Fig. 4 einstellbar ist,
Fig. 9 in einem Diagramm drei für unterschiedliche Betriebsarten der Sekundärbremsanlage mit Federspeicherbremszylindern gemäß Fig. 3 für einen ersten Fahrzeugtyp gültige Kennlinien D, E, F des Arbeitsdruckverlaufs in Abhängigkeit von einem signalisierten Bremsbedarf an der Sekundärbremsanlage, wobei diese Kennlinien im Vergleich mit den Kennlinien A, B, C der Fig. 5 einen inversen Verlauf aufweisen, und
Fig. 10 in einem Diagramm drei für unterschiedliche Betriebsarten der Sekundärbremsanlage mit Federspeicherbremszylindern gemäß Fig. 3 für einen zweiten Fahrzeugtyp gültige Kennlinien D', E', F' des Arbeitsdruckverlaufs in Abhängigkeit von einem signalisierten Bremsbedarf an der Sekundärbremsanlage, wobei diese Kennlinien im Vergleich mit den Kennlinien der Fig. 9 teilweise einen anderen Verlauf aufweisen.

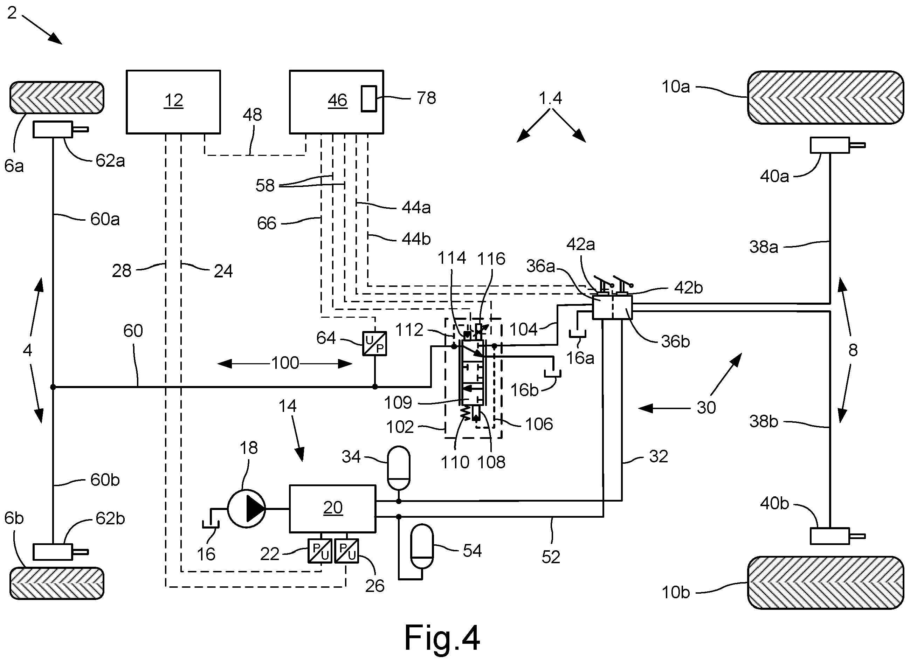

Insgesamt vier Ausführungsformen von Fremdkraftbremsanlagen 1.1, 1.2, 1.3, 1.4 mit einer erfindungsgemäßen Sekundärbremsanlage 50, 50', 68, 100 sowie ein erfindungsgemäßes Verfahren zur Steuerung einer derartigen Sekundärbremsanlage 50, 50', 68, 100 werden nachfolgend beispielhaft anhand jeweils eines Fahrzeugs 2 beschrieben, welches für den Einsatz in der Land- und Forstwirtschaft vorgesehen ist. Bei den Fremdkraftbremsanlagen 1.1, 1.2, 1.3 gemäß den Figuren 1 bis 3 ist der Arbeitsdruck der Sekundärbremsanlage 50, 50', 68 ausschließlich elektronisch steuerbar. Die Fremdkraftbremsanlage 1.4 gemäß Fig. 4 weist im Unterschied dazu eine Sekundärbremsanlage 100 auf, deren Arbeitsdruck kombiniert mechanisch und elektronisch steuerbar ist.

Bei dem in den Figuren 1 bis 3 jeweils schematisch abgebildeten Fahrzeug 2 handelt es sich um einen Ackerschlepper, der eine nicht angetriebene Vorderachse 4 mit zwei beidseitig angeordneten Vorderrädern 6a, 6b und eine als Antriebsachse ausgebildete Hinterachse 8 mit zwei beidseitig angeordneten Hinterrädern 10a, 10b aufweist. Das Fahrzeug 2 ist mit einer hydraulischen Primärbremsanlage 30 und mit einer hydraulischen Sekundärbremsanlage 50, 50', 68 ausgerüstet. Eine hydraulische Druckmittelquelle 14 weist eine Ölpumpe 18, von der Hydrauliköl aus einem hydraulischen Sammelbehälter 16 förderbar ist, und eine hydraulische Druckmittelaufbereitungseinrichtung 20 auf, in der das geförderte Hydrauliköl gereinigt, gekühlt und an eine erste Vorratsleitung 32 sowie eine zweite Vorratsleitung 52 geleitet wird. An diese beiden Vorratsleitungen 32, 52 ist jeweils ein erster hydraulischer Drucksensor 22 beziehungsweise ein zweiter hydraulischer Drucksensor 26 sowie ein erster hydraulischer Druckspeicher 34 beziehungsweise ein zweiter hydraulischer Druckspeicher 54 angeschlossen. Die beiden Drucksensoren 22, 26 sind über eine erste elektrische Sensorleitung 24 beziehungsweise eine zweite elektrische Sensorleitung 28 mit einer zentralen elektronischen Steuereinheit 12 des Fahrzeugs 2 verbunden.

Die Primärbremsanlage 30 ist als Betriebsbremsanlage sowie als Lenkbremsanlage nutzbar und weist zwei Bremskreise auf, welche jeweils einer Fahrzeugseite zugeordnet sind. Die Primärbremsanlage 30 umfasst die erste Vorratsleitung 32 mit dem zugeordneten hydraulischen ersten Druckspeicher 34, zwei von dem Fahrer über jeweils ein Bremspedal mechanisch betätigbare Fußbremsventile 36a, 36b sowie zwei Bremsleitungen 38a, 38b, an welche jeweils ein Radbremszylinder 40a, 40b angeschlossen ist. Die beiden Radbremszylinder 40a, 40b sind als aktiv wirksame Membran- oder Kolbenbremszylinder ausgebildet und an den Radbremsen der Hinterräder 10a, 10b angeordnet.

In der Funktion der Primärbremsanlage 30 als Betriebsbremsanlage sind die Bremspedale mechanisch miteinander gekoppelt, sodass bei einer Betätigung eines der beiden Bremspedale beide Radbremszylinder 40a, 40b synchron mit demselben Bremsdruck beaufschlagt werden und das Fahrzeug 2 dadurch spurstabil abgebremst wird. In der Funktion als Lenkbremsanlage sind die beiden Bremspedale mechanisch getrennt, sodass bei einer Betätigung eines der beiden Bremspedale nur der zugeordnete Radbremszylinder (40a oder 40b) mit Bremsdruck beaufschlagt und dadurch ein Kurven- oder Wendemanöver des Fahrzeugs 2 in die betreffende Richtung unterstützt wird.

Die beiden Fußbremsventile 36a, 36b weisen einen Druckmitteleingang, einen Druckmittelausgang und jeweils einen Bremsdruckausgang auf. An den Druckmitteleingang ist die erste Vorratsleitung 32 angeschlossen. An den Druckmittelausgang ist ein druckloser hydraulischer Sammelbehälter 16a angeschlossen. An die beiden Bremsdruckausgänge ist jeweils die zugeordnete Bremsleitung 38a, 38b angeschlossen. Durch ein Niederdrücken der Bremspedale wird innerhalb der Fußbremsventils 36a, 36b jeweils ein axialbeweglich gelagerter Ventilkolben verschoben und dadurch der in der jeweiligen Bremsleitung 38a, 38b und somit in dem betreffenden Radbremszylinder 40a, 40b wirksame Bremsdruck kontinuierlich zwischen einem Nulldruck und einem durch den in der Vorratsleitung 32 anstehenden Vorratsdruck verstellt sowie dadurch die über die Radbremszylinder 40a, 40b auf die Radbremsen der Hinterräder 10a, 10b wirksame Bremskraft eingestellt.

Mittels jeweils einen an den beiden Fußbremsventilen 36a, 36b angeordneten Wegsensors 42a, 42b wird der Stellweg des betreffenden Ventilkolbens gemessen und hier über jeweils eine elektrische Sensorleitung 44a, 44b an eine elektronische Bremssteuereinheit 46 übertragen, in der aus dem jeweiligen Stellwegsignal ein Bremswertsignal S_{BW} gebildet werden kann. Das Bremswertsignal S_{BW} gibt elektrisch den Abbremswunsch beziehungsweise die Bremsanforderung des Fahrers wieder und kann einen beliebigen Wert zwischen 0% für eine nicht vorhandene Bremsanforderung und 100% für eine maximale Bremsanforderung annehmen. Die Bremssteuereinheit 46 steht über einen Datenbus 48, wie zum Beispiel einen CAN-Bus, mit der zentralen Steuereinheit 12 des Fahrzeugs 2 in Verbindung.

Die in der Fig. 1 in einer ersten Ausführungsform dargestellte Sekundärbremsanlage 50 ist elektronisch steuerbar ausgebildet und zumindest als Hilfsbremsanlage nutzbar, in deren Funktion das Fahrzeug 2 bei einem Ausfall der Primärbremsanlage 30 sicher abgebremst werden kann. Diese Sekundärbremsanlage 50 umfasst die zweite Vorratsleitung 52 mit dem zugeordneten hydraulischen zweiten Druckspeicher 54, ein Bremssteuerventil 56, eine Arbeitsleitung beziehungsweise Bremsleitung 60 mit zwei endseitigen Leitungszweigen 60a, 60b, sowie einen jeweils an einen dieser beiden Leitungszweige 60a, 60b angeschlossenen vorderen Radbremszylinder 62a, 62b. Die beiden vorderen Radbremszylinder 62a, 62b sind als aktiv wirksame Membranzylinder oder Kolbenbremszylinder ausgebildet und an den Radbremsen der Vorderräder 6a, 6b angeordnet.

Das Bremssteuerventil 56 ist als ein 3/3-Wege-Proportionalmagnetventil mit einem Druckmitteleingang, einem Druckmittelausgang und einem Arbeitsanschluss ausgebildet, bei dem der Arbeitsanschluss kontinuierlich zwischen einer Verbindung mit dem Druckmittelausgang und dem Druckmitteleingang verstellbar ist. Der Druckmitteleingang ist über die zweite Vorratsleitung 52 mit der hydraulischen Druckmittelquelle 14, der Druckmittelausgang mit einem drucklosen hydraulischen Sammelbehälter 16b und der Arbeitsanschluss über die erwähnte Bremsleitung 60 mit den beiden Radbremszylindern 62a, 62b verbunden. Bei den in der Fig. 1 separat abgebildeten hydraulischen Sammelbehältern 16, 16a, 16b kann es sich um einen einzigen Sammelbehälter handeln, in den jeweils eine Saugleitung oder Rückflussleitung geführt ist.

Über eine entsprechende Ansteuerung des Bremssteuerventils 56 ist der in der Bremsleitung 60 und in den an diese angeschlossenen Radbremszylindern 62a, 62b anliegende Bremsdruck p_{B} stufenlos zwischen einem dem Umgebungsdruck entsprechenden Minimaldruck und einem dem in der zweiten Vorratsleitung 52 anliegenden Vorratsdruck entsprechenden Maximaldruck einstellbar. Dies ist in den Diagrammen der Figuren 1 und 2 beispielhaft für zwei unterschiedlich schwere Fahrzeugtypen dargestellt, worauf später noch im Detail eingegangen wird.

Der Elektromagnet des Bremssteuerventils 56 ist über eine elektrische Steuerleitung 58 mit der der Bremssteuereinheit 46 verbunden und unmittelbar von dieser ansteuerbar beziehungsweise bestrombar. Der Arbeitsanschluss des Bremssteuerventils 56 ist im unbestromten Zustand mit dem Druckmittelausgang des Bremssteuerventils 56 und im maximal bestromten Zustand mit dem maximal vorgesehenen Durchlass mit dem Druckmitteleingang verbunden. Zur Messung und Überwachung des über das Bremssteuerventil 56 in die Bremsleitung 60 eingesteuerten Arbeits- bzw. Bremsdruckes p_{B} ist an die zur Vorderachse 4 führende Bremsleitung 60 ein elektrohydraulischer Drucksensor 64 angeschlossen, welcher über eine elektrische Sensorleitung 66 mit der Bremssteuereinheit 46 verbunden ist. Die Sekundärbremsanlage 50 gemäß Fig. 1 ist somit rein elektronisch steuerbar. Der Bremsdruck p_{B} in der Bremssteuerleitung 60 und in den an diese Bremssteuerleitung 60 angeschlossenen Radbremszylindern 62a, 62b ist demnach unabhängig von der Primärbremsanlage 30 nur in Abhängigkeit von einem Bremswertsignal S_{BW} einstellbar, welches in der Bremssteuereinheit 46 aus den Sensorsignalen der Wegsensoren 42a, 42b oder auf andere Weise bestimmt werden kann.

Die in Fig. 2 abgebildete zweite Ausführungsform einer erfindungsgemäßen Sekundärbremsanlage 50' unterscheidet sich bei gleicher Funktionsweise von der ersten Ausführungsform der Sekundärbremsanlage 50 gemäß Fig. 1 nur durch eine andere Anordnung der dieser zugeordneten Radbremszylinder 62a', 62b'. Diese Ausführungsform der Sekundärbremsanlage 50' umfasst die zweite Vorratsleitung 52 mit dem zugeordneten hydraulischen zweiten Druckspeicher 54, ein Bremssteuerventil 56, eine Arbeitsleitung beziehungsweise Bremsleitung 60' mit zwei endseitigen Leitungszweigen 60a', 60b' sowie einen jeweils an einen der beiden Leitungszweige 60a', 60b' angeschlossenen Radbremszylinder 62a', 62b'. Die beiden Radbremszylinder 62a', 62b' sind ebenfalls als aktiv wirksame Membran- oder Kolbenbremszylinder ausgebildet, bei dieser Ausführungsform jedoch an den Radbremsen der Hinterräder 10a, 10b angeordnet. Aufgrund der gemeinsamen Anordnung an der Hinterachse 8 können diese Radbremszylinder 62a', 62b' der Sekundärbremsanlage 50' mit denselben Radbremselementen, wie Bremsscheiben oder Bremstrommeln, in Wirkverbindung stehen wie die Radbremszylinder 40a, 40b der Primärbremsanlage 30. Ebenso können die Radbremszylinder 62a', 62b' dieser Sekundärbremsanlage 50' und die Radbremszylinder 40a, 40b der Primärbremsanlage 30 jeweils in sogenannten Kombibremszylindern baulich zusammengefasst sein.

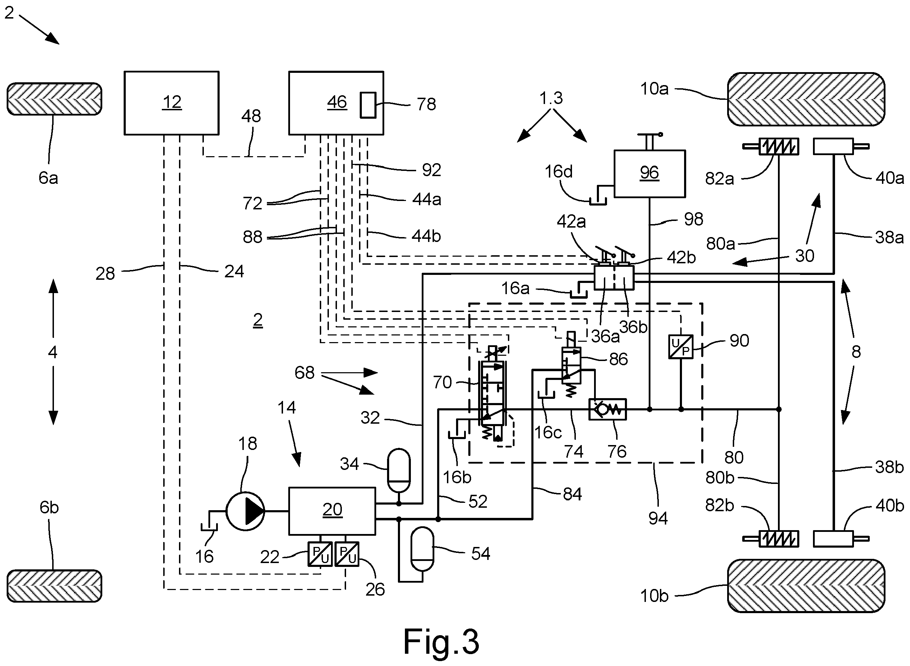

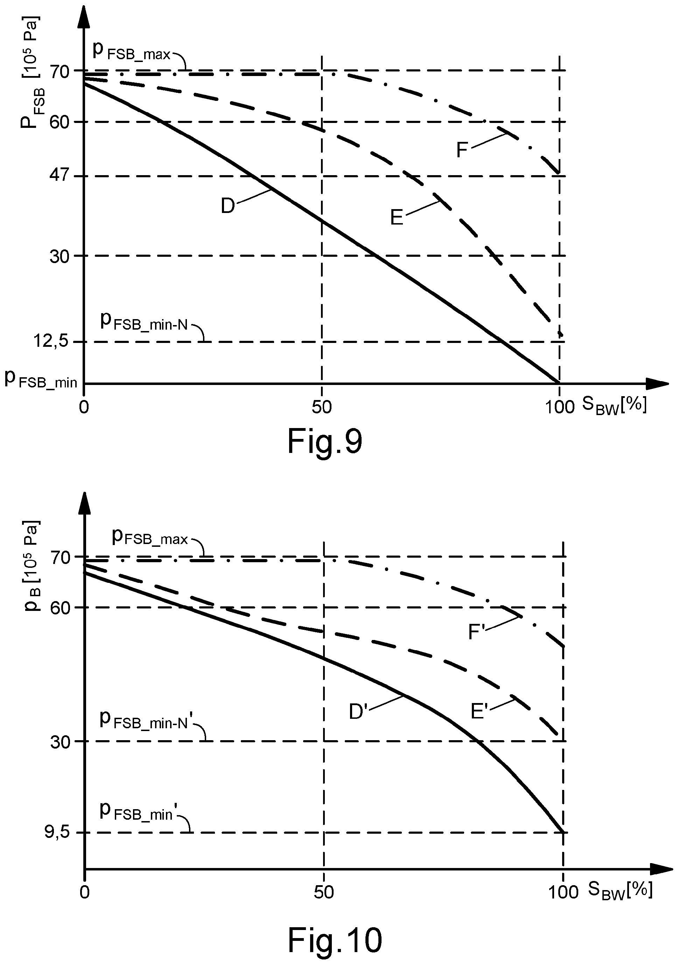

Die in Fig. 3 abgebildete dritte Ausführungsform einer erfindungsgemäßen Sekundärbremsanlage 68 unterscheidet sich von der Konstruktion der zweiten Sekundärbremsanlage 50' gemäß Fig. 2 im Wesentlichen dadurch, dass die zugeordneten, an der Hinterachse 8 des Fahrzeugs 2 angeordneten Radbremszylinder 82a, 82b als passiv wirksame Federspeicherbremszylinder ausgebildet sind. Hierdurch ist eine im Bergleich zu den beiden bereits vorgestellten Sekundärbremsanlagen 50, 50' mit aktiv wirksamen Radbremszylindern 40a, 40b; 40a', 40b' invertierte Ansteuerung erforderlich, da die betreffenden Radbremsen mit zunehmendem Arbeitsdruck p_{FSB} gelöst und mit abnehmendem Arbeitsdruck p_{FSB} zugespannt werden. Andererseits kann die Sekundärbremsanlage 68 gemäß Fig. 3 dadurch außer als Hilfsbremsanlage auch als Feststellbremsanlage beziehungsweise Parkbremse genutzt werden. Bremsdruck-Kennlinien beziehungsweise Arbeitsdruck-Kennlinien für eine derartige Sekundärbremsanlage 50' gemäß Fig. 2 sind in den Figuren 9 und 10 dargestellt, worauf später noch im Detail eingegangen wird.

Die Sekundärbremsanlage 68 gemäß Fig. 3 umfasst die zweite Vorratsleitung 52 mit dem zugeordneten zweiten hydraulischen Druckspeicher 54, ein Bremssteuerventil 70, eine eingangsseitige Arbeitsleitung 74, ein steuerbares Rückschlagventil 76 mit einem diesem zugeordneten Vorsteuerventil 86, eine ausgangsseitige Arbeitsleitung 80 mit zwei hinterachsseitigen Leitungszweigen 80a, 80b sowie einen jeweils an einen der beiden Leitungszweige 80a, 80b angeschlossenen Federspeicherbremszylinder 82a, 82b. Die beiden Federspeicherbremszylinder 82a, 82b sind an den Radbremsen der Hinterräder 10a, 10b angeordnet und können mit den Radbremszylindern 40a, 40b der Primärbremsanlage 30 ebenfalls in sogenannten Kombibremszylindern baulich zusammengefasst sein.

Das Bremssteuerventil 70 der Sekundärbremsanlage 68 gemäß Fig. 3 ist als ein 3/3-Wege-Proportionalmagnetventil mit einem Druckmitteleingang, einem Druckmittelausgang und einem Arbeitsanschluss ausgebildet, mittels dem der Arbeitsanschluss kontinuierlich zwischen einer Verbindung mit dem Druckmittelausgang und dem Druckmitteleingang verstellbar ist. Der Druckmitteleingang ist über die zweite Vorratsleitung 52 mit der hydraulischen Druckmittelquelle 14, der Druckmittelausgang mit einem drucklosen hydraulischen Sammelbehälter 16b und der Arbeitsanschluss über die genannten Arbeitsleitungen 74, 80 mit den Federspeicherbremszylindern 82a, 82b verbunden. Das steuerbare Rückschlagventil 76 ist in Richtung zum Bremssteuerventil 70 absperrend in der eingangsseitigen Arbeitsleitung 74 angeordnet. Der Elektromagnet des Bremssteuerventils 70 ist über eine elektrische Steuerleitung 72 elektrisch mit der Bremssteuereinheit 46 verbunden und von dieser unmittelbar ansteuerbar beziehungsweise bestrombar. Der Arbeitsanschluss des Bremssteuerventils 70 ist im unbestromten Zustand mit dem Druckmittelausgang und im maximal bestromten Zustand über seinen maximal vorgesehenen Durchlass mit dem Druckmitteleingang verbunden.

Das steuerbare Rückschlagventil 76 ist druckgesteuert ausgebildet und durch eine Druckbeaufschlagung seines Steuereingangs entsperrbar. Mittels des dem Rückschlagventil 76 zugeordneten Vorsteuerventils 86 ist der Steuereingang des Rückschlagventils 76 wechselweise mit der Druckmittelquelle 14 oder einem drucklosen hydraulischen Sammelbehälter 16c verbindbar. Das Vorsteuerventil 86 ist als ein 3/2-Wege-Magnetschaltventil mit einem Druckmitteleingang, einem Druckmittelausgang und einem Steuerausgang ausgebildet. Der Druckmitteleingang des Vorsteuerventils 86 ist über eine Anschlussleitung 84 mit der zweiten Vorratsleitung 52, der Druckmittelausgang mit dem hydraulischen Sammelbehälter 16c und der Steuerausgang mit dem Steuereingang des Rückschlagventils 76 verbunden. Der Steuerausgang des Vorsteuerventils 86 ist im unbestromten Zustand mit dem Druckmittelausgang und im bestromten Zustand mit dem Druckmitteleingang verbunden. Der Elektromagnet des Vorsteuerventils 86 ist über eine elektrische Steuerleitung 88 von der Bremssteuereinheit 46 ansteuerbar.

Über das steuerbare Rückschlagventil 76 ist die eingangsseitige Arbeitsleitung 74 mit der ausgangsseitigen Arbeitsleitung 80 verbunden. An die ausgangsseitige Arbeitsleitung 80 ist über eine Druckleitung 98 eine Handpumpe 96 angeschlossen, mit welcher Hydrauliköl manuell aus einem drucklosen hydraulischen Sammelbehälter 16d in die hinterachsseitigen Federspeicherbremszylinder 82a, 82b gepumpt werden kann. Die Handpumpe 96 verfügt über ein nicht dargestelltes Rückschlagventil, sodass ein unbeabsichtigtes Entlüften über die Handpumpe 96 ausgeschlossen ist. Mittels der Handpumpe 96 kann die über die drucklosen Federspeicherbremszylinder 82a, 82b eingelegte Feststellbremse gelöst werden, zum Beispiel um das Fahrzeug 2 abschleppen zu können, wenn dies aufgrund eines Defektes auf andere Weise nicht möglich ist.

Bei den in Fig. 3 separat abgebildeten hydraulischen Sammelbehältern 16, 16a, 16b, 16c, 16d kann es sich um einen einzigen Sammelbehälter handeln, in den jeweils eine Saugleitung oder Rückflussleitung geführt ist. Zur Messung und Überwachung des in den hinterachsseitigen Federspeicherbremszylindern 82a, 82b anliegenden Arbeitsdruckes p_{FSB} ist an die ausgangsseitige Arbeitsleitung 80 ein elektrohydraulischer Drucksensor 90 angeschlossen, welcher über eine elektrische Sensorleitung 92 mit der Bremssteuereinheit 46 verbunden ist.

In der dritten Ausführungsform der Sekundärbremsanlage 68 gemäß Fig. 3 sind das Bremssteuerventil 70, das steuerbare Rückschlagventil 76 mit dem zugeordneten Vorsteuerventil 86 und der Drucksensor 90 in einem Bremssteuermodul 94 baulich zusammengefasst. Durch die Zusammenfassung der genannten Ventile 70, 76, 86 und des Drucksensors 90 in dem Bremssteuermodul 94 wird deren Montage im Fahrzeug 2 vereinfacht und Anschlussfehler vermieden.

Auch bei der dritten Ausführungsform der Sekundärbremsanlage 68 gemäß Fig. 3 kann der in den Radbremszylindern 82a, 82b wirksame Arbeitsdruck p_{FSB} durch eine entsprechende Ansteuerung des Bremssteuerventils 70 von der elektronischen Bremssteuereinheit 46 kontinuierlich zwischen einem dem Umgebungsdruck entsprechenden Minimaldruck und einem dem in der zweiten Vorratsleitung 52 anliegenden Vorratsdruck entsprechenden Maximaldruck p_{FSB}_ₘₐₓ eingestellt werden. Dabei bleibt das steuerbare Rückschlagventil 76 bei einer Erhöhung des Arbeitsdruckes p_{FSB} unbetätigt; es muss bei einer Absenkung des Arbeitsdruckes p_{FSB} aber durch eine Umschaltung des zugeordneten Vorsteuerventils 86 entsperrt werden.

Bei einem Ausfall der elektrischen Energieversorgung der elektronischen Bremssteuereinheit 46 oder beim Auftreten einer elektronischen Störung ist durch das dann nicht entsperrte Rückschlagventil 76 gewährleistet, dass der in dieser Situation drucklose Arbeitsanschluss des Bremssteuerventils 70 von den Federspeicherbremszylindern 82a, 82b getrennt ist. Der wirksame Arbeitsdruck p_{FSB} ist dann in den Federspeicherbremszylindern 82a, 82b eingeschlossen, sodass der aktuelle Betriebszustand der Sekundärbremsanlage 68 beibehalten wird.

Ein wesentlicher Vorteil der beschriebenen Sekundärbremsanlagen 50, 50', 68 gemäß den Figuren 1 bis 3 besteht darin, dass bei diesen der Arbeitsdruck p_{B}, p_{FSB} in den Bremszylindern 62a, 62b; 62a', 62b', 82a, 82b in Abhängigkeit von dem aktuellen Wert des Bremswertsignals S_{BW} unter Ansteuerung des jeweiligen Bremssteuerventils 56, 56', 70, im Fall der Sekundärbremsanlage 68 gemäß Fig. 3 zusätzlich auch des dem Bremssteuerventil 70 nachgeschalteten steuerbaren Rückschlagventils 76, ausschließlich nichtmechanisch einstellbar ist. Der Arbeitsdruck p_{B}, p_{FSB} in den Bremszylindern 62a, 62b; 62a', 62b', 82a, 82b ist dabei durch eine entsprechende Bestromung des jeweiligen Bremssteuerventils anhand von Kennlinien einstellbar, welche für unterschiedliche Betriebsarten der Sekundärbremsanlage 50, 50', 68 oder auch unterschiedlich schwerer Fahrzeuge oder Fahrzeugtypen gelten. Diese Kennlinien sind an das jeweilige Fahrzeug 2 sowie an die verwendeten Bauteile der Sekundärbremsanlage 50, 50', 68 angepasst und in einem Datenspeicher 78 abgespeichert, welcher vorzugsweise der Bremssteuereinheit 46 zugeordnet ist.

So können sehr weitgehend baugleiche erfindungsgemäße Sekundärbremsanlagen 50, 50', 68 in unterschiedlichen Fremdkraftbremsanlagen 1.1, 1.2, 1.3 verbaut sein, wobei deren Komponenten durch eine sachgerechte, jeweils unterschiedliche Steuerung der Betätigung des dortigen Bremssteuerventils 56, 56', 70 berücksichtigt werden. So beträgt beispielsweise bei einer ersten erfindungsgemäßen Fremdkraftbremsanlage in einem ersten Fahrzeugtyp X der maximale Speicherdruck 180 × 10⁵ Pa, der für eine maximale Bremsleistung erforderliche Bremsdruck 50 × 10⁵ Pa, und der aufgrund der Mechanik der dortigen Bremse maximal ertragbare Bremsdruck 80 × 10⁵ Pa. Bei einer zweiten erfindungsgemäßen Fremdkraftbremsanlage in einem zweiten Fahrzeugtyp Y beträgt beispielsweise der maximale Speicherdruck 150 × 10⁵ Pa, der für eine maximale Bremsleistung erforderliche Bremsdruck beträgt 30 × 10⁵ Pa, und der aufgrund der Mechanik der dortigen Bremse maximale ertragbare Bremsdruck 40 × 10⁵ Pa. Ein in den beiden Fremdkraftbremsanlagen eingebautes identisches Bremssteuerventil 56, 56', 70 wäre dann so dimensioniert, dass es im maximal bestromten Zustand einen Arbeitsdruck von maximal 50 × 10⁵ Pa an seinem Druckmittelausgang aussteuern kann. Dadurch wird in der Bremsablage des ersten Fahrzeugtyps X der Arbeitsdruckbedarf für eine maximale Bremsleistung erreicht. Bei der Sekundärbremsanlage des zweiten Fahrzeugtyps Y wird der von dem Bremssteuerventil aussteuerbare maximale Arbeitsdruck auf 40 × 10⁵ Pa begrenzt. Der jeweilige maximale Arbeitsdruck ist durch die Maximalwerte in den Kurvenverläufen der erwähnten Kennlinien bestimmt, welche in dem Datenspeicher 78 der Bremssteuereinheit 46 abgespeichert sind.

Wie schon erwähnt unterscheidet sich die in Fig. 4 dargestellte vierte Ausführungsform einer erfindungsgemäßen Sekundärbremsanlage 100 von den Sekundärbremsanlagen 50, 50', 68 gemäß den Figuren 1 bis 3 hauptsächlich dadurch, dass die Sekundärbremsanlage 100 ein als Druckreduzierventil ausgebildetes Bremssteuerventil 102 aufweist. Demnach stellt dieses Bremssteuerventil 102 einen für das gegebene Fahrzeug und die vorliegende Fahrsituation gewünschten Bremsdruck ein, indem es bei ansteigenden Werten des Bremswertsignals S_{BW} den ausgesteuerten Bremsdruck entsprechend den in der Bremssteuereinheit 46 abgespeicherten Kennlinien gegenüber dem in das Bremssteuerventil 102 eingesteuerten Druck reduziert. Dieser Sachverhalt ist auch in den Diagrammen der Figuren 7 und 8 dargestellt, worauf noch im Detail eingegangen wird.

Demnach ist auch bei der vierten Fremdkraftbremsanlage 1.14 gemäß Fig. 4 die Primärbremsanlage 30 als Betriebsbremsanlage sowie als Lenkbremsanlage nutzbar. Die Primärbremsanlage 30 wirkt in einem ersten Bremskreis auf die Radbremszylinder 40a, 40b an den Rädern 10a, 10b der Hinterachse 8, während die Sekundärbremsanlage 100 in einem zweiten Bremskreis auf die Radbremszylinder 62a, 62b an den Rädern 6a, 6b der Vorderachse 4 einwirkt. Die Primärbremsanlage 30 weist eine erste Vorratsleitung 32 mit einem zugeordneten ersten hydraulischen Druckspeicher 34, ein von dem Fahrer über ein Bremspedal mechanisch betätigbares zweites Fußbremsventil 36b sowie zwei daran angeschlossene Bremsleitungen 38a, 38b auf, an welche jeweils einer der hinteren Radbremszylinder 40a, 40b angeschlossen ist. Die beiden Radbremszylinder 40a, 40b sind als aktiv wirksame Membran- oder Kolbenbremszylinder ausgebildet. Zudem ist ein erstes Fußbremsventil 36a vorhanden, welches ebenfalls mittels eines Bremspedals betätigbar ist und zu der Sekundärbremsanlage 100 gehört. Die beiden Bremspedale sind mechanisch miteinander koppelbar.

Wie erwähnt ist die erste Vorratsleitung 32 an einen Eingang des zweiten Fußbremsventils 36b angeschlossen, mittels dem wie gerade beschrieben der Arbeitsdruck beziehungsweise Bremsdruck an den beiden Radbremszylindern 40a, 40b im Bereich der Hinterachse 8 einstellbar ist. Die zu der Sekundärbremsanlage 100 gehörende zweite Vorratsleitung 52 ist mit einem zugeordneten zweiten Druckspeicher 54 verbunden sowie an einen Eingang des ersten Fußbremsventils 36a angeschlossen. Mittels dieses ersten Fußbremsventils 36a ist ein maximaler Arbeitsdruck beziehungsweise ein maximaler Bremsdruck für die zwei Radbremszylinder 62a, 62b im Bereich der Vorderachse 4 einstellbar ist. Dieser maximale Arbeitsdruck für die vorderen Radbremszylinder 62a, 62b kann einen Wert zwischen dem Umgebungsdruck des Fahrzeugs 2 und dem von dem zweiten Druckspeicher 54 zur Verfügung gestellten Vorratsdruck haben, wenngleich dieser maximale Arbeitsdruck üblicherweise unter dem im zweiten Druckspeicher 54 vorhandenen Vorratsdruckwert liegt.

An einen ersten Ausgang des ersten Fußbremsventils 36a ist ein druckloser hydraulischer Sammelbehälter 16a angeschlossen. An einem zweiten Ausgang des ersten Fußbremsventils 36a ist eine Arbeitsdruckleitung 104 angeschlossen, in welcher der von der Betätigungsstellung des ersten Fußbremsventils 36a bestimmte maximale Arbeitsdruck für die beiden vorderen Radbremszylinder 62a, 62b zu einem Druckmitteleingang des als Druckreduzierventil ausgebildeten Bremssteuerventils 102 weiterleitbar ist.

Dieses Bremssteuerventil 102 ist als ein 3/3-Wege-Proportionalventil mit dem erwähnten Druckmitteleingang, einem Druckmittelausgang und einem Arbeitsanschluss ausgebildet. An den Druckmitteleingang des Bremssteuerventils 102 ist wie erwähnt die Arbeitsdruckleitung 104 angeschlossen. Der Druckmittelausgang des Bremssteuerventils 102 ist mit einem drucklosen hydraulischen Sammelbehälter 16b verbunden, und an den Arbeitsanschluss ist die zu den vorderen Radbremszylindern 62a, 62b führende Arbeitsleitung 60 angeschlossen.

Das Bremssteuerventil 102 weist einen axial verschiebbaren Ventilschieber 109 auf, an dessen einen axialen Ende eine Ventilfeder 110 mit einer Federkraft wirkt. Auf das gleiche axiale Ende des Ventilschiebers 109 wirkt ein erster Steuerdruck, welcher über einen ersten Steuerdruckeingang 108 zugeführt wird. Dieser erste Steuerdruck wird über eine Eingangssteuerdruckleitung 106 zugeführt, welche mit deren anderen Ende mit dem Druckmitteleingang des Bremssteuerventils 102 oder mit der erwähnten Arbeitsdruckleitung 104 verbunden ist. Auf das axial gegenüber liegende Ende des Ventilschiebers 109 wirkt ein zweiter Steuerdruck, welcher dem Ventilschieber 109 über einen zweiten Steuerdruckeingang 114 zuführbar ist. Dieser zweite Steuerdruckeingang 114 ist über eine Ausgangssteuerdruckleitung 112 mit dem Arbeitsanschluss des Bremssteuerventils 102 oder mit der zu den vorderen Radbremszylindern 62a, 62b führenden Arbeitsleitung 60 verbunden. Schließlich wirkt auf den Ventilscheiber 109 ein elektromagnetischer Aktuator 116 des Bremssteuerventils 102, dessen Magnetspule bei einer Bestromung den Ventilschieber 109 in Richtung zur Ventilfeder 110 treibt.

Die Funktionsweise dieses Bremssteuerventils 102 ist derart, dass es in Abhängigkeit von der Bestromung des Elektromagneten des zugeordneten Aktuators 116 den am Druckmitteleingang anliegenden Druck zu einem am Arbeitsanschluss bereitgestellten Arbeits- oder Bremsdruck für die vorderen Radbremszylinder 62a, 62b reduziert. Beträgt am Arbeitsanschluss beziehungsweise in der Arbeitsdruckleitung 104 der Druck 100 × 10⁵ Pa und wird der Elektromagnet des Aktuators 102 nicht bestromt, so liegt am Arbeitsanschluss des Bremssteuerventils 102 ebenfalls ein Arbeits- oder Bremsdruck von p_{B} = 100 × 10⁵ Pa an. Bei einer Bestromung des Elektromagneten des Aktuators 116 mit 20% seiner Maximalbestromung liegt am Arbeitsanschluss ein Arbeitsdruck von p_{B} = 80 × 10⁵ Pa an. Wird der Elektromagneten mit 40% seiner Maximalbestromung bestromt, so beträgt der Arbeitsdruck am Arbeitsausgang des Bremssteuerventils 60 × 10⁵ Pa. Wenn durch Betätigung des ersten Fußbremsventils 36a der Druck in der eingangsseitigen Arbeitsdruckleitung 104 auf 60 × 10⁵ Pa eingestellt ist, dann liegt bei gleicher Bestromung des Elektromagneten 116 von 40% seiner Maximalbestromung am Arbeitsanschluss ein Druck von p_{B} = 20 × 10⁵ Pa an. Das Bremssteuerventil 102 der vierten Sekundärbremsanlage 100 gemäß Fig. 4 wirkt bei einer Bestromung des Elektromagneten des Aktuators 116 demnach druckreduzierend. Daher wird durch die Bestromung des Elektromagneten des Aktuators 102 ein bestimmter Druckwert am Arbeitsanschluss des Bremssteuerventils 102 nicht direkt bereitgestellt, sondern ein an seinem Druckmitteleingang anliegender Druck in bestimmter Weise reduziert und so als Arbeits- oder Bremsdruck an die vorderen Radbremszylinder 62a, 62b weitergeleitet.

Im Ergebnis werden demnach die an die Primärbremsanlage 30 angeschlossenen hinteren Radbremszylinder 40a, 40b mittels des zweiten Fußbremsventils 36b rein mechanisch durch einen Fahrer des Fahrzeugs betätigt, während der in den vorderen Radbremszylindern 62a, 62b herrschende Druck kombiniert mechanisch und elektronisch eingestellt wird. Von besonderer Bedeutung ist dabei, dass die elektronisch gesteuerte Betätigung des Bremssteuerventils 102 nur eine Reduzierung desjenigen Drucks bewirken kann, welcher von dem ersten Fußbremsventil 36a dem Bremssteuerventil 102 bereitgestellt wurde.

Wie erwähnt kann die vierte Fremdkraftbremsanlage 1.4 gemäß Fig. 4 auch als Lenkbremsanlage genutzt werden. Hierbei ist entscheidend, dass während der Durchführung einer Lenkbremsaktion die Vorderräder 6a, 6b des Fahrzeugs 2 nicht gebremst werden dürfen. Dies wird dadurch erreicht, dass der Elektromagnet 116 des als Druckreduzierventil ausgebildeten Bremssteuerventils 102 elektronisch so angesteuert wird, dass dieses keinen Arbeitsdruck p_{B} beziehungsweise nur einen Arbeitsdruck entsprechend dem atmosphärischen Umgebungsdruck in die Arbeitsdruckleitung 60 aussteuert. Da dieses quasi Abschalten der Bremsfunktion der Radbremszylinder 62a, 62b an den Vorderrädern 6a, 6b mittels eines rein mechanisch arbeitenden, konventionellen Fußbremsventils nur mit großem technischen Aufwand realisierbar wäre, bietet diese vierte Fremdkraftbremsanlage 1.4 den großen Vorteil, dass mit ihr das Abhalten der Bremsfunktion der Radbremszylinder 62a, 62b an den Vorderrädern 6a, 6b mittels des Bremssteuerventils 102 technisch vergleichsweise einfach und genau erfolgen kann.

Nachfolgend wird anhand von mehreren Diagrammen erläutert, wie die in den Figuren 1 bis 4 vorgestellten Fremdkraftbremsanlagen 1.1, 1.2, 1.3, 1.4 vorteilhaft betrieben werden können.

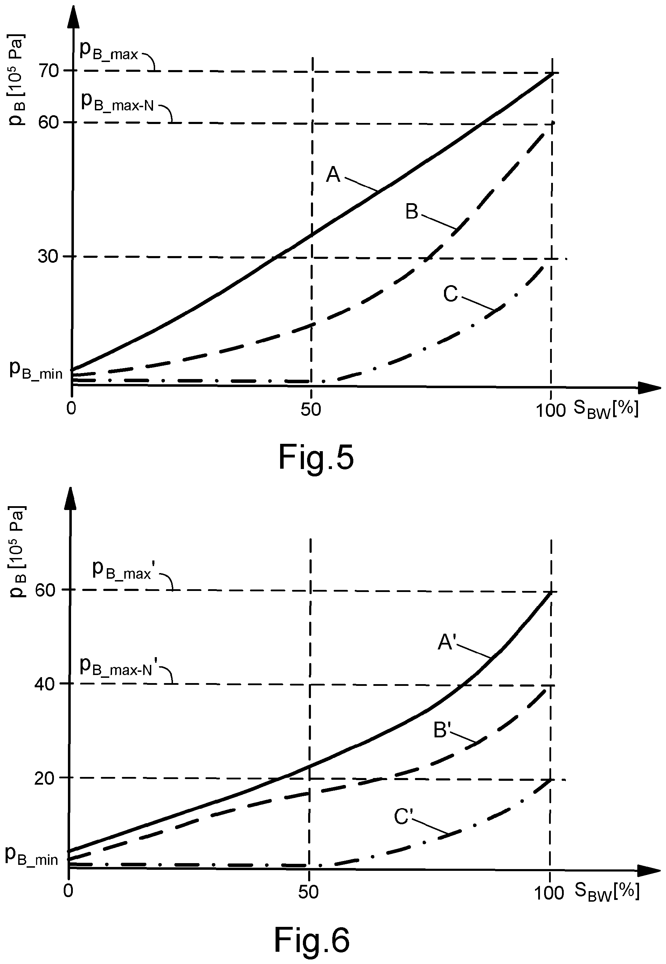

In dem in Fig. 5 dargestellten Diagramm sind demnach beispielhaft drei Kennlinien A, B, C für die Steuerung der mit aktiv wirksamen Radbremszylindern 62a, 62b ausgerüsteten Sekundärbremsanlagen 50, 50' gemäß den Figuren 1 und 2 eines schwereren Fahrzeugs eingezeichnet. In Abhängigkeit dieser drei Kennlinien A, B, C wird die Bestromung des Aktuators des dortigen Bremssteuerventils 56, 70 gesteuert. Die ersten drei Kennlinien A, B, C geben den in die Radbremszylinder 62a, 62b einzusteuernden Bremsdruck p_{B} in Abhängigkeit von dem aktuellen Wert eines Bremswertsignals S_{BW} für unterschiedliche Betriebsarten der Sekundärbremsanlage 50, 50' wieder. Das Bremswertsignal S_{BW} kann beispielsweise aus dem Stellwegsignal des an einem der Fußbremsventile 36a, 36b angeordneten Wegsensors 42a, 42b bestimmt worden sein. Es gibt die Bremsanforderung beziehungsweise den Bremswunsch des Fahrers wieder, wobei ein Wert von 0% des Bremswertsignals eine nicht vorhandene Bremsanforderung und ein Wert von 100% des Bremswertsignals eine maximale Bremsanforderung des Fahrers bedeutet.

Die erste Kennlinie A gilt für eine Notbremsfunktion der Sekundärbremsanlage 50, 50', bei deren Nutzung die Betriebsbremsanlage 30 durch die Sekundärbremsanlage 50, 50' abbremsend unterstützt oder von dieser hinsichtlich der Abbremsung des Fahrzeugs 2 ersetzt wird. Entsprechend dieser ersten Kennlinie A ist vorgesehen, dass die Bestromung des Aktuators des Bremssteuerventils 56, 70 derartig erfolgt, dass der als Bremsdruck wirksame Arbeitsdruck p_{B} ausgehend von einem minimalen Bremsdruck p_{B}_ₘᵢₙ nahe 0 Pa bei einem Wert des Bremswertsignals S_{BW} von 0% dann mit ansteigenden Wert des Bremswertsignals S_{BW} weitgehend linear bis auf einen maximalen Bremsdruck p_{B}_ₘₐₓ von vorliegend 70 × 10⁵ Pa bei einem Wert des Bremswertsignals S_{BW} von 100% erhöht wird. Durch den weitgehend linearen Verlauf der Druckerhöhung und der damit verbundenen linearen Zunahme der Bremskraft der Radbremszylinder 62a, 62b wird eine schnellstmögliche Steigerung der Bremswirkung erzielt.

Die zweite Kennlinie B gilt für eine Hilfsbremsfunktion der Sekundärbremsanlage 50, 50', bei deren Nutzung die Betriebsbremsanlage 30 von der Sekundärbremsanlage 50, 50' abbremsend ersetzt wird. Entsprechend dieser zweiten Kennlinie B ist vorgesehen, dass die Bestromung des Aktuators des Bremssteuerventils 56, 70 derartig erfolgt, dass der Arbeitsdruck p_{B} ausgehend von dem minimalen Bremsdruck p_{B}_ₘᵢₙ bei einem Wert des Bremswertsignals S_{BW} von 0% mit ansteigendem Wert des Bremswertsignals progressiv bis auf einen maximalen Bremsdruck im Normalbetrieb p_{B}__{max-N} bei einem Bremswertsignal S_{BW} von 100% erhöht wird. Dieser maximale Bremsdruck im Normalbetrieb p_{B}__{max-N} liegt unterhalb des maximalen Bremsdruckes p_{B}_ₘₐₓ = 70 × 10⁵ Pa bei p_{B}__{max-N} = 60 × 10⁵ Pa. Durch den hier vorgesehenen progressiven Verlauf der Bremsdruckerhöhung und der damit verbundenen progressiven Zunahme der Bremskraft der Radbremszylinder 62a, 62b ist die Änderung der Bremswirkung an das übliche komfortable Verhalten einer druckgesteuerten Primärbremsanlage angepasst.

Die dritte Kennlinie C gilt für eine Zusatzbremsfunktion der Sekundärbremsanlage 50, 50', bei deren Nutzung die Betriebsbremsanlage 30 bei höheren Bremswertsignalen von vorliegend S_{BW} ≥ 54% von der Sekundärbremsanlage 50, 50' abbremsend unterstützt wird. Entsprechend dieser dritten Kennlinie C ist vorgesehen, dass die Bestromung des Aktuators des Bremssteuerventils 56, 70 derartig erfolgt, dass der Arbeitsdruck p_{B} ausgehend von dem minimalen Bremsdruck p_{B}_ₘᵢₙ bei einem Wert des Bremswertsignals von S_{BW} = 0% ab einem festgelegten Startwert des Bremswertsignals von S_{BW_Start} = 54% mit weiter ansteigendem Werten des Bremswertsignals progressiv bis auf einen Arbeitsdruck p_{B}, der zwischen dem minimalen Bremsdruck p_{B}_ₘᵢₙ und dem maximalen Bremsdruck im Normalbetrieb p_{B}__{max-N} liegt, auf p_{B} = 30 × 10⁵ Pa bei einem Bremswertsignal S_{BW} von 100% erhöht wird. Auch hier ist durch den progressiven Verlauf der Druckerhöhung und der damit verbundenen progressiven Zunahme der Bremskraft der Radbremszylinder 62a, 62b die unterstützende Bremswirkung der Sekundärbremsanlage 50, 50' in Verbindung mit der Bremswirkung der Primärbremsanlage 30 dem üblichen komfortablen Verhalten einer druckgesteuerten Primärbremsanlage mit stärkeren Radbremsen angepasst.

Um eine zu starke Bremsverzögerung eines leichteren Fahrzeugs und eine unnötig hohe Belastung der Radbremsen der Sekundärbremsanlage 50, 50' zu vermeiden, weisen vierte, fünfte und sechste Kennlinien A', B', C' gemäß Fig. 6 für ein leichtes Fahrzeug oder ein Fahrzeug mit geringer Beladung im Vergleich zu den ersten bis dritten Kennlinien A, B, C gemäß Fig. 5 für ein schweres Fahrzeug oder ein Fahrzeug mit großer Beladung jeweils einen über die Werte des Bremswertsignals S_{BW} in Richtung zum minimalen Arbeitsdruck p_{B}_ₘᵢₙ reduzierten Verlauf sowie geringere Maximalwerte des Arbeitsdruckes p_{B} auf. In dem Diagramm der Fig. 6 sind demzufolge im Druckniveau entsprechend abgesenkte vierte, fünfte und sechste Kennlinien A', B', C' einer Sekundärbremsanlage 50, 50' eines leichteren Fahrzeugs dargestellt. Der maximale Bremsdruck beträgt p_{B}_ₘₐₓ' = 60 × 10⁵ Pa und der maximale Bremsdruck im Normalbetrieb p_{B}__{max-N}' = 40 × 10⁵ Pa.

Die drei Kennlinien A, B, C gemäß Fig. 1 und Fig. 2 zur Steuerung des Bremssteuerventils 56 und damit der Sekundärbremsanlage 50, 50' können fest vorgegeben sowie in dem Datenspeicher 78 der elektronischen Bremssteuereinheit 46 abgespeichert sein. Sie dienen dort zur Steuerung der Bestromung des elektromagnetischen Aktuators des Bremssteuerventils 56. Es ist jedoch auch möglich, dass die zweite Kennlinie B und die dritte Kennlinie C für die Hilfsbremsfunktion beziehungsweise die Zusatzbremsfunktion aus der ersten Kennlinie A für die Notbremsfunktion der Sekundärbremsanlage 50, 50' mittels einer Übertragungsfunktion mit variabler Absenkung des Arbeitsdruckes p_{B} über den Werten des Bremswertsignals S_{BW} erzeugt werden, wobei die Absenkung des Arbeitsdruckes p_{B} bei niedrigen Werten des Bremswertsignals (S_{BW} ≤ 50%) größer ist als bei großen Werten des Bremswertsignals (S_{BW} > 50%). Diese Vorgehensweise zur Ermittlung der zweiten und dritten Kennlinie B, C aus der ersten Kennlinie A ist in dem Diagramm der Fig. 7 graphisch durch Pfeile sowie durch die dort eingetragenen negativen Prozentwerte veranschaulicht.

In dem Diagramm der Fig. 8 ist am Beispiel der ersten Kennlinie A und der vierten Kennlinie A' für die Notbremsfunktion veranschaulicht, dass die vierte bis sechste Kennlinie A', B', C' für ein leichtes Fahrzeug oder ein Fahrzeug mit geringer Beladung aus den entsprechenden ersten drei Kennlinien A, B, C für ein schweres Fahrzeug oder ein Fahrzeug mit hoher Beladung durch eine zum Fahrzeuggewicht proportionale Reduzierung des Arbeitsdruckes p_{B} über die Werte des Bremswertsignal S_{BW} von hier 20% erzeugt werden können. Demnach kann ein anderer Fahrzeugtyp mit der gleichen erfindungsgemäßen Bremsanlage betrieben werden wie diejenigen der Figuren 1 bis 3, sofern eine angepasste Arbeitsdruckabsenkung erfolgt.

In dem in Fig. 9 abgebildeten Diagramm sind beispielhaft drei weitere Kennlinien, nämlich die siebte bis neunte Kennlinie D, E, F, für die mit passiv wirksamen Radbremszylindern 82a, 82b ausgerüstete Sekundärbremsanlage 68 gemäß Fig. 3 eingezeichnet. Diese passiv wirksamen Radbremszylindern 82a, 82b sind beispielsweise Federspeicherbremszylinder. Die siebte bis neunte Kennlinie D, E, F geben den in die Radbremszylinder 82a, 82b einzusteuernden Arbeitsdruck p_{FSB} in Abhängigkeit von den Werten des Bremswertsignals S_{BW} für unterschiedliche Betriebsarten der Sekundärbremsanlage 68 wieder. In Abhängigkeit dieser Kennlinienverläufe wird der Elektromagnet des Aktuators des Bremssteuerventils bestromt.

Die siebte Kennlinie D in Fig. 9 gilt für eine Notbremsfunktion der Sekundärbremsanlage 68, bei deren Nutzung die Betriebsbremsanlage 30 durch die Sekundärbremsanlage 68 abbremsend unterstützt oder von dieser ersetzt wird. Entsprechend dieser siebten Kennlinie D ist vorgesehen, dass der Arbeitsdruck p_{FSB} ausgehend von einem maximalen Arbeitsdruck p_{FSB}_ₘₐₓ von vorliegend 70 × 10⁵ Pa bei einem Bremswertsignal S_{BW} von 0% mit ansteigenden Werten des Bremswertsignals weitgehend linear bis auf einen minimalen Arbeitsdruck p_{FSB}_ₘᵢₙ nahe 0 Pa bei einem Wert des Bremswertsignals S_{BW} von 100% abgesenkt wird. Durch den weitgehend linearen Verlauf der Druckabsenkung und der damit verbundenen linearen Zunahme der Bremskraft der Federspeicherbremszylinder 82a, 82b wird eine schnellstmögliche Steigerung der Bremswirkung erzielt. Hierbei wird eine Mindestverzögerung des Fahrzeugs von mindestens 2,2 m/s² sehr deutlich überschritten.

Die achte Kennlinie E gilt für eine Hilfsbremsfunktion der Sekundärbremsanlage 68, bei deren Nutzung die Betriebsbremsanlage 30 von der Sekundärbremsanlage 68 hinsichtlich der Bremswirkung auf das Fahrzeug 2 ersetzt wird. Entsprechend dieser achten Kennlinie E ist vorgesehen, dass der Arbeitsdruck p_{FSB} ausgehend von einem maximalen Arbeitsdruck von vorliegend 70 × 10⁵ Pa bei einem Wert des Bremswertsignals S_{BW} von 0% mit ansteigenden Werten des Bremswertsignal progressiv bis auf einen Arbeitsdruck p_{FSB}, der über dem minimalen Arbeitsdruck p_{FSB}_ₘᵢₙ von hier 12,5 × 10⁵ Pa liegt, bei einem Bremswertsignal von S_{BW} = 100%, abgesenkt wird. Durch den progressiven Verlauf der Druckabsenkung und der damit verbundenen progressiven Zunahme der Bremskraft der Federspeicherbremszylinder 82a, 82b wird die Änderung der Bremswirkung dem üblichen Verhalten einer druckgesteuerten Primärbremsanlage angepasst. Auch hier wird eine Mindestverzögerung des Fahrzeugs von mindestens 2,2 m/s² sicher erreicht.

Die neunte Kennlinie F gilt für eine Zusatzbremsfunktion der Sekundärbremsanlage 68, bei deren Nutzung die Betriebsbremsanlage 30 bei höheren Bremswertsignalen von vorliegend S_{BW} ≥ 54% von der Sekundärbremsanlage 68 abbremsend unterstützt wird. Entsprechend dieser neunten Kennlinie F ist vorgesehen, dass der Arbeitsdruck p_{FSB} ausgehend von einem maximalen Arbeitsdruck von vorliegend p_{FSB}_ₘₐₓ = 70 × 10⁵ Pa bei einem Bremswertsignal S_{BW} von 0% ab einem festgelegten Startwert des Bremswertsignals von hier S_{BW_Start} = 54% mit ansteigenden Werten des Bremswertsignals progressiv bis auf einen Arbeitsdruck p_{FSB}, der zwischen dem maximalen Arbeitsdruck p_{FSB}_ₘₐₓ und dem minimalen Arbeitsdruck im Normalbetrieb p_{FSB}__{min-N} liegt, hier auf p_{FSB} = 47 × 10⁵ Pa bei einem Bremswertsignal S_{BW} von 100% abgesenkt wird. Auch hierbei ist durch den progressiven Verlauf der Druckabsenkung und der damit verbundenen progressiven Zunahme der Bremskraft der Federspeicherbremszylinder 82a, 82b die unterstützende Bremswirkung der Sekundärbremsanlage 68 in Verbindung mit der Bremswirkung der Primärbremsanlage 30 dem üblichen Verhalten einer druckgesteuerten Primärbremsanlage mit stärkeren Radbremsen angepasst.

Um eine zu starke Bremsverzögerung eines leichteren Fahrzeugs und eine unnötig hohe Belastung der Radbremsen der Sekundärbremsanlage 68 zu vermeiden, weisen zehnte, elfte und zwölfte Kennlinien D', E', F' gemäß Fig. 10 für ein leichtes Fahrzeug oder ein Fahrzeug mit geringer Beladung gegenüber den entsprechenden siebten bis neunten Kennlinien D, E, F gemäß Fig. 9 für ein schweres Fahrzeug oder ein Fahrzeug mit großer Beladung jeweils einen in Richtung zum maximalen Arbeitsdruck p_{FSB}_ₘₐₓ erhöhten Verlauf des Arbeitsdruckes p_{FSB} über die ansteigende Werte des Bremswertsignals S_{BW} auf. Im Druckniveau entsprechend erhöhte zehnte bis zwölfte Kennlinien D', E', F' einer Sekundärbremsanlage 68 eines leichteren Fahrzeugs mit einem auf 9,5 × 10⁵ Pa angehobenen minimalen Arbeitsdruck p_{FSB}_ₘᵢₙ' und einem auf 30 × 10⁵ Pa angehobenen minimalen Arbeitsdruck im Normalbetrieb p_{FSB}__{min-N}' sind in dem Diagramm der Fig. 10 dargestellt. Wenn ein leichteres Fahrzeug mit schwächeren Federspeicherbremszylindern ausgerüstet wäre, würden die zehnte, elfte und zwölfte Kennlinie D', E', F' entsprechend der geringeren Federsteifigkeit der Bremsfedern in Richtung des minimalen Arbeitsdruckes p_{FSB} = 0 Pa verschoben und damit das Druckniveau des Arbeitsdruckes p_{FSB} insgesamt abgesenkt.

### Bezugszeichenliste (Teil der Beschreibung)

- 1.1: Fremdkraftbremsanlage (erste Ausführungsform)
- 1.2: Fremdkraftbremsanlage (zweite Ausführungsform)
- 1.3: Fremdkraftbremsanlage (dritte Ausführungsform)
- 1.4: Fremdkraftbremsanlage (vierte Ausführungsform)
- 2: Fahrzeug, Ackerschlepper
- 4: Vorderachse
- 6a, 6b: Zwei Vorderräder
- 8: Hinterachse, Antriebsachse
- 10a, 10b: Zwei Hinterräder
- 12: Elektronische Steuereinheit
- 14: Druckmittelquelle
- 16: Druckmittelsenke, Sammelbehälter
- 16a, 16b: Erste und zweite Druckmittelsenke, Sammelbehälter
- 16c, 16d: Dritte und vierte Druckmittelsenke, Sammelbehälter
- 18: Ölpumpe
- 20: Druckmittelaufbereitungseinrichtung
- 22: Erster Drucksensor
- 24: Erste Sensorleitung
- 26: Zweiter Drucksensor
- 28: Zweite Sensorleitung
- 30: Primärbremsanlage, Betriebsbremsanlage
- 32: Erste Vorratsleitung
- 34: Erster Druckspeicher
- 36a, 36b: Erstes und zweites Fußbremsventil
- 38a, 38b: Erste und zweite Bremsleitung
- 40a, 40b: Erster und zweiter Radbremszylinder an Rädern der Hinterachse
- 42a: Erster Wegsensor
- 42b: Zweiter Wegsensor
- 44a: Sensorleitung am Wegsensor 42a
- 44b: Sensorleitung am Wegsensor 42b
- 46: Bremssteuereinheit
- 48: Datenbus, CAN-Bus
- 50: Erste Sekundärbremsanlage, Hilfsbremsanlage
- 50': Zweite Sekundärbremsanlage, Hilfsbremsanlage
- 52: Zweite Vorratsleitung
- 54: Zweiter Druckspeicher
- 56: Bremssteuerventil
- 58: Steuerleitung
- 60, 60': Arbeitsleitung, Bremsleitung
- 60a, 60b: Zwei vorderachsseitige Leitungszweige der Sekundärbremsanlage 50
- 60a', 60b': Zwei hinterachsseitige Leitungszweige der Sekundärbremsanlage 50'
- 62a, 62b: Zwei Radbremszylinder an Rädern der Vorderachse
- 62a', 62b': Zwei Radbremszylinder an Rädern der Hinterachse
- 64: Dritter Drucksensor
- 66: Dritte Sensorleitung
- 68: Dritte Sekundärbremsanlage, Hilfs- und Feststellbremsanlage
- 70: Bremssteuerventil
- 72: Steuerleitung
- 74: Eingangsseitige Arbeitsleitung
- 76: Steuerbares Rückschlagventil
- 78: Datenspeicher
- 80: Ausgangsseitige Arbeitsleitung
- 80a: Erster hinterachsseitiger Leitungszweig der Sekundärbremsanlage 68
- 80b: Zweiter hinterachsseitiger Leitungszweig der Sekundärbremsanlage 68
- 82a: Erster Radbremszylinder, erster Federspeicherbremszylinder
- 82b: Zweiter Radbremszylinder, zweiter Federspeicherbremszylinder
- 84: Anschlussleitung
- 86: Vorsteuerventil
- 88: Steuerleitung
- 90: Vierter Drucksensor
- 92: Sensorleitung
- 94: Drucksteuermodul
- 96: Handpumpe
- 98: Druckleitung
- 100: Vierte Sekundärbremsanlage, Hilfsbremsanlage
- 102: Bremssteuerventil (als Druckreduzierventil ausgebildet)
- 104: Arbeitsdruckleitung
- 106: Eingangsdrucksteuerleitung
- 108: Erster Steuerdruckeingang
- 109: Ventilschieber
- 110: Ventilfeder
- 112: Ausgangsdrucksteuerleitung
- 114: Zweiter Steuerdruckeingang
- 116: Elektromagnetischer Aktuator am Bremssteuerventil 102
- a_{Br}: Bremsverzögerung
- A: Erste Kennlinie
- B: Zweite Kennlinie
- C: Dritte Kennlinie
- A': Vierte Kennlinie
- B': Fünfte Kennlinie
- C': Sechste Kennlinie
- D: Siebte Kennlinie
- E: Achte Kennlinie
- F: Neunte Kennlinie
- D': Zehnte Kennlinie
- E': Elfte Kennlinie
- F': Zwölfte Kennlinie
- p_{B}: Arbeitsdruck, Bremsdruck
- p_{B}_ₘₐₓ: Maximaler Bremsdruck gemäß Fig. 5
- p_{B_max}': Maximaler Bremsdruck gemäß Fig. 7
- p_{B}_ₘᵢₙ: Minimaler Bremsdruck gemäß Fig. 5
- p_{B}__{max-N}: Maximaler Bremsdruck im Normalbetrieb gemäß Fig. 5
- p_{B}__{max-N}': Maximaler Bremsdruck im Normalbetrieb gemäß Fig. 6
- p_{FSB}: Arbeitsdruck, Bremslösedruck
- p_{FSB}_ₘₐₓ: Maximaler Arbeitsdruck gemäß Fig. 9
- p_{FSB}_ₘᵢₙ: Minimaler Arbeitsdruck gemäß Fig. 9
- p_{FSB_min}': Minimaler Arbeitsdruck gemäß Fig. 10
- p_{FSB}__{min-N}: Minimaler Arbeitsdruck gemäß Fig. 9
- p_{FSB_min-N}': Minimaler Arbeitsdruck gemäß Fig. 10
- S_{BW}: Wert des Bremswertsignals
- S_{BW_Start}: Startwert des Bremswertsignals
- vₘₐₓ: Zulässige Höchstgeschwindigkeit

## Patentansprüche

1. Fremdkraftbremsanlage (1.1, 1.2, 1.3, 1.4) eines Fahrzeugs (2),
mit einer Druckmittelquelle (14),
mit einer als Betriebsbrems- und Lenkbremsanlage nutzbaren druckmittelbetriebenen Primärbremsanlage (30),
wobei die Primärbremsanlage (30) mindestens ein Fußbremsventil (36a, 36b) sowie zwei beidseitig an einer Antriebsachse (8) angeordnete und unabhängig voneinander betätigbare Radbremszylinder (40a, 40b) aufweist,
und mit einer unabhängig von der Primärbremsanlage (30) betätigbaren, zumindest als Hilfsbremsanlage nutzbaren druckmittelbetriebenen Sekundärbremsanlage (50; 50'; 68; 100),
wobei die Sekundärbremsanlage (50; 50'; 68; 100) ein Bremssteuerventil (56; 70; 102) sowie mindestens einen auf die Radbremsen einer Fahrzeugachse (4, 8) wirksamen Bremszylinder (62a, 62b; 62a', 62b'; 82a, 82b) aufweist,
**dadurch gekennzeichnet,**
**dass** die Sekundärbremsanlage (50; 50'; 68; 100) elektronisch steuerbar ausgebildet ist und folgendes aufweist:
- ein als Magnetventil ausgebildetes Bremssteuerventil (56; 70; 102),
mittels dem die Bremskraft des mindestens einen Bremszylinders (62a, 62b; 62a', 62b'; 82a, 82b) durch eine Zufuhr oder Abfuhr von Druckmittel in oder von demselben einstellbar ist,
- einen Drucksensor (64; 90),
welcher an eine zu dem mindestens einen Bremszylinder (62a, 62b; 62a', 62b'; 82a, 82b) führende Arbeitsleitung (60; 60'; 74, 80) angeschlossen ist,
- und eine elektronische Bremssteuereinheit (46) zur Auswertung eines Drucksignals des Drucksensors (64; 90) sowie zur Ansteuerung des Bremssteuerventils (56; 70; 102) in Abhängigkeit von einem Bremswertsignal (S_{BW}).

2. Fremdkraftbremsanlage (1.1, 1.2, 1.3) nach Anspruch 1, **dadurch gekennzeichnet, dass** das Bremssteuerventil (56; 70) als ein 3/3-Wege-Proportionalventil mit einem Druckmitteleingang, einem Druckmittelausgang und einem Arbeitsanschluss ausgebildet ist,
wobei der Arbeitsanschluss kontinuierlich zwischen einer Verbindung mit dem Druckmittelausgang und dem Druckmitteleingang verstellbar ist,
dass der Druckmitteleingang über eine Vorratsleitung (52) mit einer Druckmittelquelle (14) verbunden ist,
dass der Druckmittelausgang mit einer Druckmittelsenke (16b) verbunden ist,
dass der Arbeitsanschluss über die Arbeitsleitung (60; 60'; 74, 80) mit dem mindestens einen Bremszylinder (62a, 62b; 62a', 62b'; 82a, 82b) verbunden ist,
und dass der Arbeitsanschluss des Bremssteuerventils (56; 70) im unbestromten Zustand mit dem Druckmittelausgang sowie im maximal bestromten Zustand mit dem Druckmitteleingang verbunden ist.

3. Fremdkraftbremsanlage (1.1, 1.2) nach Anspruch 1 oder 2, **dadurch gekennzeichnet, dass** die Sekundärbremsanlage (50; 50') mindestens zwei als aktiv wirksame Membran- oder Kolbenbremszylinder ausgebildete Bremszylinder (62a, 62b; 62a', 62b') aufweist,
und dass diese Bremszylinder (62a, 62b; 62a', 62b') als Radbremszylinder beidseitig an den Radbremsen einer Antriebsachse (8) oder einer nicht angetriebenen Fahrzeugachse (4) angeordnet sind.

4. Fremdkraftbremsanlage (1.3) nach Anspruch 1 oder 2, **dadurch gekennzeichnet, dass** die Sekundärbremsanlage (68) mindestens zwei als passiv wirksame Federspeicherbremszylinder ausgebildete Bremszylinder (82a, 82b) aufweist,
und dass diese Bremszylinder (82a, 82b) als Radbremszylinder beidseitig an den Radbremsen einer Antriebsachse (8) oder einer nicht angetriebenen Fahrzeugachse (4) angeordnet sind.

5. Fremdkraftbremsanlage nach Anspruch 1, **dadurch gekennzeichnet,**
**dass** die Sekundärbremsanlage mindestens einen als ein passiv wirksamer Bremszylinder (82a, 82b) ausgebildeten Bremszylinder aufweist,
und **dass** der Bremszylinder (82a, 82b) als Achsbremszylinder an einer Wellenbremse einer zentralen Abtriebswelle des Antriebsstrangs angeordnet ist.

6. Fremdkraftbremsanlage (1.4) nach Anspruch 1, **dadurch gekennzeichnet,**
**dass** das Bremssteuerventil (102) als ein 3/3-Wege-Proportionalventil mit einem Druckmitteleingang, einem Druckmittelausgang und einem Arbeitsanschluss ausgebildet ist,
wobei der Arbeitsanschluss kontinuierlich zwischen einer Verbindung mit dem Druckmittelausgang und dem Druckmitteleingang verstellbar ist,
**dass** der Druckmitteleingang über ein zwischen zwei Vorratsdruckleitungen (52, 104) angeordnetes Fußbremsventil (36a) mit einer Druckmittelquelle (14) verbunden ist, dass der Druckmittelausgang mit einer Druckmittelsenke (16b) verbunden ist,
**dass** der Arbeitsanschluss über die Arbeitsleitung (60) mit dem mindestens einen Bremszylinder (62a, 62b) verbunden ist,
**dass** der Druckmitteleingang über eine Eingangsdrucksteuerleitung (106) mit einem ersten Steuerdruckeingang (108) verbunden ist, welcher auf ein erstes axiales Ende des Ventilschiebers (109) des Bremssteuerventils (102) wirkt,
**dass** der Druckmittelausgang über eine Ausgangsdrucksteuerleitung (112) mit einem zweiten Steuerdruckeingang (114) verbunden ist, welcher auf ein zweites axiales Ende des Ventilschiebers (109) des Bremssteuerventils (102) wirkt,
**dass** eine Ventilfeder (110) auf das erste axiale Ende des Bremssteuerventils (102) wirkt,
**dass** auf das zweite axiale Ende des Bremssteuerventils (102) ein elektromagnetischer Aktuator (116) wirkt,
und **dass** durch eine Bestromung des Aktuators (116) eine Reduzierung des am Druckmittelausgang anliegenden Arbeitsdrucks im Vergleich mit dem am Druckmitteleingang anliegenden Vorratsdruck einstellbar ist.

7. Fremdkraftbremsanlage (1.3) nach Anspruch 4 oder 5, **dadurch gekennzeichnet, dass** zum Halten eines Arbeitsdruckes (p_{FSB}) in den Bremszylindern (82a, 82b) beziehungsweise in dem einzigen Bremszylinder ein steuerbares, in Richtung des Bremssteuerventils (70) sperrendes Rückschlagventil (76) in der Arbeitsleitung (74) angeordnet ist.

8. Fremdkraftbremsanlage (1.3) nach Anspruch 7, **dadurch gekennzeichnet,**
**dass** das steuerbare Rückschlagventil (76) druckgesteuert ausgebildet sowie durch eine Druckbeaufschlagung seines Steuereingangs entsperrbar ist,
und **dass** dem Rückschlagventil (76) ein Vorsteuerventil (86) zugeordnet ist,
mittels dem der Steuereingang des Rückschlagventils (76) wechselweise mit der Druckmittelquelle (14) oder einer Druckmittelsenke (16c) verbindbar ist.

9. Fremdkraftbremsanlage (1.3) nach Anspruch 8, **dadurch gekennzeichnet,**
**dass** das Vorsteuerventil (86) als ein 3/2-Wege-Magnetschaltventil mit einem Druckmitteleingang, einem Druckmittelausgang und einem Steuerausgang ausgebildet ist, dass der Druckmitteleingang über eine Anschlussleitung (84) mit der Vorratsleitung (52) verbunden ist,
**dass** der Druckmittelausgang mit der Druckmittelsenke (16c) verbunden ist,
**dass** der Steuerausgang mit dem Steuereingang des Rückschlagventils (76) verbunden ist, dass der Steuerausgang des Vorsteuerventils (86) im unbestromten Zustand mit dem Druckmittelausgang sowie im bestromten Zustand mit dem Druckmitteleingang verbunden ist,
und **dass** der Elektromagnet des Vorsteuerventils (86) über eine elektrische Steuerleitung (88) mit der Bremssteuereinheit (46) verbunden ist.

10. Fremdkraftbremsanlage (1.3) nach einem der Ansprüche 5 bis 6, **dadurch gekennzeichnet, dass** zumindest das Bremssteuerventil (70), das Rückschlagventil (76) und das Vorsteuerventil (86) in einem Bremssteuermodul (94) zusammengefasst sind.

11. Fremdkraftbremsanlage (1.1, 1.2, 1.3, 1.4) nach einem der Ansprüche 1 bis 10, **dadurch gekennzeichnet,**
**dass** der Bremssteuereinheit (46) ein Datenspeicher (78) zugeordnet ist,
in dem für unterschiedliche Betriebsarten vorgesehene en (A, B, C; D, E, F) zur Einstellung des Arbeitsdruckes (p_{B}, p_{FSB}) in den Bremszylindern (62a, 62b; 62a', 62b'; 82a, 82b) in Abhängigkeit von einem Bremswertsignal (S_{BW}) und/oder zur Berechnung von Kennlinien (A', B', C'; D', E', F') abgespeichert sind.

12. Fremdkraftbremsanlage (1.1, 1.2, 1.3, 1.4) nach einem der Ansprüche 1 bis 11, **dadurch gekennzeichnet,**
**dass** die Sekundärbremsanlage (50; 50', 68) als eine hydraulische Bremsanlage ausgebildet ist,
**dass** die Druckmittelquelle (14) eine Ölpumpe (18), eine hydraulische Druckaufbereitungseinrichtung (20) und einen zweiten hydraulischen Druckspeicher (54) aufweist, und dass die Druckmittelsenke (16) durch mindestens einen hydraulischen Sammelbehälter gebildet ist.

13. Fremdkraftbremsanlage nach einem der Ansprüche 1 bis 11, **dadurch gekennzeichnet,**
**dass** die Sekundärbremsanlage als eine Druckluftbremsanlage ausgebildet ist,
**dass** die Druckmittelquelle einen Kompressor, eine pneumatische Druckaufbereitungseinrichtung und einen pneumatischen Druckspeicher aufweist,
und **dass** die Druckmittelsenke durch mindestens einen Entlüftungsausgang gebildet ist.

14. Verfahren zur Steuerung einer druckmittelbetriebenen Sekundärbremsanlage (50; 50', 68; 100) in einer Fremdkraftbremsanlage (1.1, 1.2, 1.3, 1.4) eines Fahrzeugs (2) mit den Merkmalen des Anspruchs 1,
wobei die Sekundärbremsanlage (50; 50', 68; 100) elektronisch steuerbar ausgebildet ist und folgendes aufweist:
- ein als Magnetventil ausgebildetes Bremssteuerventil (56; 70; 102),
mittels dem die Bremskraft des mindestens einen Bremszylinders (62a, 62b; 62a', 62b'; 82a, 82b) durch eine Zufuhr oder Abfuhr von Druckmittel in oder von demselben einstellbar ist,
- einen Drucksensor (64; 90),
welcher an eine zu dem mindestens einen Bremszylinder (62a, 62b; 62a', 62b'; 82a, 82b) führende Arbeitsleitung (60; 60'; 74, 80) angeschlossen ist,
- und eine elektronische Bremssteuereinheit (46) zur Auswertung eines Drucksignals des Drucksensors (64; 90) sowie zur Ansteuerung des Bremssteuerventils (56; 70; 102) in Abhängigkeit von einem Bremswertsignal (S_{BW}),
**dadurch gekennzeichnet,**
**dass** der Arbeitsdruck (p_{B}, p_{FSB}) in dem mindestens einen Bremszylinder (62a, 62b; 62a', 62b'; 82a, 82b) in Abhängigkeit von dem Bremswertsignal (S_{BW}) unter Ansteuerung des Bremssteuerventils (56; 70; 102) anhand von für unterschiedliche Betriebsarten der Sekundärbremsanlage (50; 50', 68; 100) gültige Kennlinien (A, B, C; D, E, F) eingestellt wird, welche in einem der Bremssteuereinheit (46) zugeordneten Datenspeicher (78) abgespeichert sind.

15. Verfahren nach Anspruch 14, **dadurch gekennzeichnet,**
**dass** der Arbeitsdruck (p_{B}) bei einer Sekundärbremsanlage (50; 50') mit aktiv wirksamen Bremszylindern (62a, 62b; 62a', 62b') in einer Notbremsfunktion,
bei deren Nutzung die Betriebsbremsanlage (30) durch die Sekundärbremsanlage abbremsend unterstützt oder von dieser abbremsend ersetzt wird,
gemäß einer ersten Kennlinie (A) ausgehend von einem minimalen Bremsdruck (p_{B_min}) nahe 0 Pa bei einem Wert des Bremswertsignals von S_{BW} = 0% mit ansteigendem Wert des Bremswertsignals weitgehend linear bis auf einen maximalen Bremsdruck (p_{B_max}) bei einem Wert des Bremswertsignals von S_{BW} = 100% erhöht wird.

16. Verfahren nach Anspruch 14 oder 15, **dadurch gekennzeichnet,**
**dass** der Arbeitsdruck (p_{B}) bei einer Sekundärbremsanlage (50; 50') mit aktiv wirksamen Bremszylindern (62a, 62b; 62a', 62b') in einer Hilfsbremsfunktion,
bei deren Nutzung die Betriebsbremsanlage (30) von der Sekundärbremsanlage (50; 50') hinsichtlich der Bremswirkung auf das Fahrzeug ersetzt wird,
gemäß einer zweiten Kennlinie (B) ausgehend von dem minimalen Bremsdruck (p_{B_min}) bei einem Wert des Bremswertsignals von S_{BW} = 0% mit ansteigendem Wert des Bremswertsignals bis auf einen maximalen Bremsdruck im Normalbetrieb (p_{B_max-N}), welcher unterhalb des maximalen Bremsdruckes (p_{B_max}) liegt, bei einem Bremswertsignal von S_{BW} = 100% erhöht wird.

17. Verfahren nach einem der Ansprüche 14 bis 16, **dadurch gekennzeichnet,**
**dass** der Arbeitsdruck (p_{B}) bei einer Sekundärbremsanlage (50; 50') mit aktiv wirksamen Bremszylindern (62a, 62b; 62a', 62b') in einer Zusatzbremsfunktion,
bei deren Nutzung die Betriebsbremsanlage (30) bei höheren Bremswertsignalen mittels der Sekundärbremsanlage abbremsend unterstützt wird,
gemäß einer dritten Kennlinie (C) ausgehend von dem minimalen Bremsdruck (p_{B_min}) bei einem Wert des Bremswertsignals von S_{BW} = 0% ab einem festgelegten Startwert des Bremswertsignals (S_{BW_Start}) mit ansteigendem Wert des Bremswertsignals progressiv bis auf einen Arbeitsdruck (p_{B}) bei einem Bremswertsignal S_{BW} = 100% erhöht wird, welcher zwischen dem minimalen Bremsdruck (p_{B_min}) und dem maximalen Bremsdruck im Normalbetrieb (p_{B_max-N}) liegt.

18. Verfahren nach einem der Ansprüche 14 bis 17, **dadurch gekennzeichnet,**
**dass** die zweite Kennlinie (B) für die Hilfsbremsfunktion und die dritte Kennlinie (C) für die Zusatzbremsfunktion aus der ersten Kennlinie (A) für die Notbremsfunktion der Sekundärbremsanlage (50, 50') mittels einer Übertragungsfunktion mit variabler Absenkung des Arbeitsdruckes (p_{B}) über dem Bremswertsignal (S_{BW}) erzeugt werden,
wobei die Absenkung des Arbeitsdruckes (p_{B}) bei niedrigen Werten des Bremswertsignals größer ist als bei hohen Werten des Bremswertsignals.

19. Verfahren nach einem der Ansprüche 14 bis 18, **dadurch gekennzeichnet,**
**dass** vierte bis sechste Kennlinien (A', B', C') für ein leichtes Fahrzeug oder ein Fahrzeug mit geringer Beladung im Vergleich zu den entsprechenden ersten bis dritten Kennlinien (A, B, C) für ein schweres Fahrzeug oder ein Fahrzeug mit großer Beladung jeweils einen in Richtung des minimalen Arbeitsdruckes (p_{B_min}) reduzierten Verlauf des Arbeitsdruckes (p_{B}) bezogen auf ansteigende Werte des Bremswertsignals (S_{BW}) aufweisen.

20. Verfahren nach Anspruch 19, **dadurch gekennzeichnet,**
**dass** die vierten bis sechsten Kennlinien (A', B', C') für ein leichtes Fahrzeug oder ein Fahrzeug mit geringer Beladung aus der entsprechenden ersten, zweiten und dritten Kennlinie (A, B, C) für ein schweres Fahrzeug oder ein Fahrzeug mit großer Beladung durch eine zum Fahrzeuggewicht proportionale Reduzierung des Arbeitsdruckes (p_{B}) bezogen auf ansteigende Werte des Bremswertsignals (S_{BW}) erzeugt werden.

21. Verfahren nach Anspruch 14, **dadurch gekennzeichnet,**
**dass** der Arbeitsdruck (p_{FSB}) bei einer Sekundärbremsanlage (68; 100) mit passiv wirksamen Bremszylindern (82a, 82b) bei der Nutzung einer Notbremsfunktion,
bei welcher die Betriebsbremsanlage (30) durch die Sekundärbremsanlage abbremsend unterstützt oder von dieser ersetzt wird,
gemäß einer siebten Kennlinie (D) ausgehend von einem maximalen Arbeitsdruck (p_{FSB_max}) bei einem Wert des Bremswertsignals von S_{BW} = 0% mit ansteigenden Werten des Bremswertsignals weitgehend linear bis auf einen minimalen Arbeitsdruck (p_{FSB_min}) nahe 0 Pa bei einem Wert des Bremswertsignals von S_{BW} = 100% abgesenkt wird.

22. Verfahren nach Anspruch 14 oder 21, **dadurch gekennzeichnet,**
**dass** der Arbeitsdruck (p_{FSB}) bei einer Sekundärbremsanlage (68; 100) mit passiv wirksamen Bremszylindern (82a, 82b) bei der Nutzung einer Hilfsbremsfunktion,
bei welcher die Betriebsbremsanlage (30) von der Sekundärbremsanlage hinsichtlich der Bremswirkung auf das Fahrzeug ersetzt wird,
gemäß einer achten Kennlinie (E) ausgehend von dem maximalen Arbeitsdruck (p_{FSB_max}) bei einem Wert des Bremswertsignals von S_{BW} = 0% mit ansteigenden Werten des Bremswertsignals bis auf einen maximalen Arbeitsdruck im Normalbetrieb (p_{FSB_minN}) bei einem Wert des Bremswertsignals von S_{BW} = 100% abgesenkt wird, welcher über dem minimalen Arbeitsdruck (p_{FSB_min}) liegt.

23. Verfahren nach einem der Ansprüche 14, 21 oder 22, **dadurch gekennzeichnet, dass** der Arbeitsdruck (p_{FSB}) bei einer Sekundärbremsanlage (68; 100) mit passiv wirksamen Bremszylindern (82a, 82b) bei Nutzung einer Zusatzbremsfunktion,
bei welcher die Betriebsbremsanlage (30) bei höheren Werten des Bremswertsignals von der Sekundärbremsanlage abbremsend unterstützt wird,
gemäß einer neunten Kennlinie (F) ausgehend von dem maximalen Arbeitsdruck (p_{FSB_max}) bei einem Wert des Bremswertsignals von S_{BW} = 0% ab einem festgelegten Startwert des Bremswertsignals (S_{BW_Start}) mit ansteigenden Werten des Bremswertsignals bis auf einen Arbeitsdruck (p_{FSB}) bei einem Wert des Bremswertsignals von S_{BW} = 100% abgesenkt wird,
welcher zwischen dem maximalen Arbeitsdruck (p_{FSB_max}) und dem minimalen Arbeitsdruck im Normalbetrieb (p_{FSB_min-N}) liegt.

24. Verfahren nach einem der Ansprüche 21 bis 23, **dadurch gekennzeichnet,**
**dass** die achte Kennlinie (E) für die Hilfsbremsfunktion und die neunte Kennlinie (F) für die Zusatzbremsfunktion aus der siebten Kennlinie (D) für die Notbremsfunktion der Sekundärbremsanlage (68; 100) mittels einer Übertragungsfunktion mit variabler Erhöhung des Arbeitsdruckes (p_{FSB}) über dem Bremswertsignal (S_{BW}) in Richtung des maximalen Arbeitsdruckes (p_{FSB_max}) erzeugt werden,
wobei die Erhöhung des Arbeitsdruckes (p_{FSB}) bei niedrigen Werten des Bremswertsignals geringer ist als bei hohen Werten des Bremswertsignals.

25. Verfahren nach einem der Ansprüche 21 bis 24, **dadurch gekennzeichnet,**
**dass** zehnte, elfte und zwölfte Kennlinien (D', E', F') für ein leichtes Fahrzeug oder ein Fahrzeug mit geringer Beladung im Vergleich zu den entsprechenden siebte, achte und neunte Kennlinie (D, E, F) für ein schweres Fahrzeug oder ein Fahrzeug mit großer Beladung jeweils einen in Richtung des maximalen Arbeitsdruckes (p_{FSB_max}) erhöhten Verlauf des Arbeitsdruckes (p_{FSB}) bezogen auf ansteigende Werte des Bremswertsignals (S_{BW}) aufweisen.

26. Verfahren nach Anspruch 25, **dadurch gekennzeichnet,**
**dass** die zehnte, elfte und zwölfte Kennlinie (D', E', F') für ein leichtes Fahrzeug oder ein Fahrzeug mit geringer Beladung aus der entsprechenden siebten, achten und neunten Kennlinie (D, E, F) für ein schweres Fahrzeug oder ein Fahrzeug mit großer Beladung durch eine zum Fahrzeuggewicht proportionale variable Erhöhung des Arbeitsdruckes (p_{FSB}) bezogen auf ansteigende Werte des Bremswertsignals (S_{BW}) in Richtung des Maximaldruckes (p_{FSB_max}) erzeugt werden,
wobei die Erhöhung des Arbeitsdruckes (p_{FSB}) bei niedrigen Werten des Bremswertsignals geringer ist als bei hohen Werten des Bremswertsignals.
